# FASCICULE DE BREVET EUROPEEN

(11) **EP 0 805 122 B1**
(45) Date de publication et mention de la délivrance du brevet: **08.10.2003**
(21) Numéro de dépôt: 97400964.9
(22) Date de dépôt: 29.04.1997
(51) Int. Cl.: C02F 1/46, C02F 1/62

(54) **Procédé pour épurer les eaux résiduaires industrielles et pour obtenir le réactif nécessaire pour l'épuration**
Verfahren zur Reinigung von Industrieabwässern, und zur Reagensherstellung für die Reinigung
Process for purifying industrial wastewaters and for producing the reagent for the purification

(30) Priorité: 30.04.1996 ES 9600981
(43) Date de publication de la demande: 05.11.1997
(73) Titulaire: Acuna Arranz, Ladislao, 20800 Zarauz (Guipuzcoa) (ES)
(72) Inventeur: Acuna Arranz, Ladislao, 20800 Zarauz (Guipuzcoa) (ES)
(74) Mandataire: Joly, Jean-Jacques

(56) Documents cités:
- WO-A-90/02709
- DE-B- 1 177 081
- US-A- 1 541 947
- US-A- 3 926 754

## Description

L'invention se rapporte à l'épuration des eaux résiduaires, de préférence de métaux lourds et elle peut être utilisée pour épurer les eaux résiduaires des productions galvaniques, des peintures, des textiles et du cuir, ainsi que celles des entreprises de la métallurgie non ferreuse.

On connaît en ce sens différents systèmes d'épuration des eaux résiduaires industrielles, comme le procédé appelé physico-chimique, celui des colonnes de résines échangeuses d'ions, celui des colonnes de résines échangeuses d'ions combiné avec le procédé physico-chimique, celui de l'électrocoagulation traditionnelle et celui de l'hydrodispersion, avec lesquels on peut satisfaire dans une mesure plus ou moins grande les normes de qualité des rejets qui sont prescrites dans les différentes législations.

Le "procédé physico-chimique" utilisé pour le traitement des eaux résiduaires industrielles qui contiennent des acides ou des bases utilise l'acide chlorhydrique, l'acide sulfurique ou d'autres pour abaisser le pH, et la soude ou d'autres pour l'élever, c'est-à-dire pour la neutralisation des eaux précitées.

On sait par ailleurs que, pour la réduction du Cr⁶⁺ en Cr³⁺, il faut une valeur de pH d'entre 2 et 3, et qu'à cette valeur de pH, on doit ajouter des réactifs tels que le bisulfite de sodium, l'hydroxyde ferreux ou d'autres pour que la réduction précitée se produise ; et qu'ensuite, on doit élever cette valeur de pH de 2-3 jusqu'à 7-8,5, et ajouter un polyélectrolyte pour obtenir la floculation et la précipitation du chrome, ce qui exige une nouvelle addition de réactif alcalin, habituellement de soude.

Ce procédé connu présente de grandes difficultés pour la précipitation simultanée avec d'autres ions de métaux lourds contenus dans les eaux résiduaires, en supplément de traitements unitaires, par exemple pour le chrome, qui doit être traité séparément pour sa réduction avant d'être mélangé avec le reste des eaux résiduaires, les ions des métaux lourds tels que le nickel, dont la précipitation et la floculation exigent une valeur de pH proche de 10, présentent une certaine problématique : la précipitation ; de sorte que, parfois, ces métaux doivent être transportés par des conduits séparés et subir la précipitation dans des modules eux aussi séparés, puisque, dans le cas contraire, certains de ces métaux lourds resteraient dans les eaux sans se précipiter parce que leurs valeurs de pH de précipitation sont différentes, et qu'on doit même employer dans certains cas des réactifs distincts, et utiliser de la chaux pour atteindre une vitesse adéquate de précipitation des hydroxydes formés.

L'eau résultant de ce processus est en outre très saline, de sorte qu'elle présente une conductibilité très élevée, due au constant apport de sels, de sorte qu'elle ne peut pas être recyclée ; cependant que les boues qui résultent de la floculation sont peu stables et, dans la majorité des cas, toxiques, de sorte qu'elles ne peuvent pas être utilisées comme matière première pour l'élaboration de sous-produits.

Dans le procédé des colonnes de résines échangeuses d'ions, on fait passer les effluents d'une façon bien différenciée, les uns par les colonnes cationiques et les autres par les colonnes anioniques ; mais une fois lesdites résines épuisées, il faut les régénérer par lavage à contre-courant avec des acides et des bases, les résines devant être remplacées par des résines neuves lorsqu'elles sont entièrement épuisées.

Ce procédé atteint une qualité d'eau à la sortie des colonnes qui satisfait les normes actuelles et ces eaux sont recyclables mais les eaux qui proviennent du lavage des colonnes à contre-courant ne le sont pas, parce qu'elles contiennent de hautes concentrations de substances toxiques et qu'elles exigent une installation physico-chimique additionnelle pour leur traitement ultérieur, de sorte qu'elles ne sont pas recyclables et qu'elles doivent être rejetées dans les égouts publics.

Dans ce procédé connu d'échange d'ions, les résidus de sédimentation et les boues qui résultent de la floculation sont plus toxiques que dans le procédé physico-chimique évoqué plus haut, puisque leurs concentrations sont beaucoup plus fortes, de sorte qu'ils ne peuvent pas être utilisés comme matière première pour l'élaboration de sous-produits.

Les deux procédés mentionnés plus haut présentent des problèmes de fonctionnement, de qualité des rejets à l'égout et de toxicité des résidus des boues résultant de la floculation, ce qui s'ajoute à la nécessité d'utiliser de grandes quantités de réactifs, qui sont d'un coût élevé dans certains cas.

Le procédé d'électrocoagulation utilise des anodes de fer solubles pour produire des ions de fer (II) par un processus électrochimique dans un milieu aqueux séparé, dont la valeur de pH ne doit pas être supérieure à 2,8 ; on maintient le milieu dans ces conditions par l'addition d'un acide (chlorhydrique ou sulfurique) et on l'ajoute ultérieurement aux effluents contaminés.

Le défaut de ce procédé consiste en ce qu'il utilise des volumes importants de cette solution engendrée par ledit procédé électrochimique, qu'il exige une grande consommation d'électricité et une précipitation problématique, ainsi qu'un degré insuffisant d'épuration de l'eau des métaux lourds tels que Co, Mn, etc..

Dans ce procédé connu, son système implique tout d'abord de produire une solution dans un milieu aqueux séparé, dans un module, par dissolution d'anodes de fer en contact avec un acide et un sel, par exemple le chlorure de sodium, mais il ne prévoit pas de maîtrise de la corrélation entre le fer (II) et le fer (III), puisqu'il ne tient pas compte de l'instabilité de l'hydroxyde de fer (II) qui s'oxyde peu à peu, en réduisant ainsi l'efficacité de l'épuration.

On connaît un procédé d'épuration des ions de métaux lourds présents dans les eaux résiduaires, qui comprend un traitement consécutif des eaux, en premier lieu avec de l'hydroxyde de fer (II), puis avec de l'hydroxyde de fer (III), et ce procédé donne la possibilité d'épurer les eaux résiduaires des ions de différents métaux lourds mais il exige d'effectuer séparément la préparation de deux réactifs épurateurs et on doit en outre tenir compte du fait que l'hydroxyde de fer (II) devient instable avec le temps et s'oxyde peu à peu en hydroxyde de fer (III), de sorte que ce procédé n'est pas efficace en présence de métaux liés dans des complexes.

Dans ce procédé connu de l'hydrodispersion, l'obtention d'un coagulant engendré électriquement s'effectue dans un générateur par dissolution d'anodes de fer, dans un milieu aqueux salin, d'une conductibilité électrique non inférieure à 5µS.cm⁻¹, en employant des anodes solubles faites de plaques ou riblons ferreux, procédé qui prévoit les étapes consistant à laver et à densifier les grumeaux de coagulant, et qui prévoit la maîtrise de la corrélation entre le fer (II) et le fer (III).

Le défaut de ce procédé consiste en ce qu'il utilise d'importants volumes de cette solution engendrée par le procédé électrochimique précité et que, du fait de son faible rendement, il exige une grande consommation d'énergie, 50 Joules environ pour l'obtention d'un milligramme de coagulant, et il a en outre un degré insuffisant d'épuration de l'eau des métaux lourds, parce que le réactif utilisé n'est pas homogène, du fait qu'on utilise des riblons divers pour l'obtention du coagulant.

On connaît aussi un procédé d'électrocoagulation qui utilise des anodes de fer solubles pour produire des ions de fer par un processus électrochimique dans un milieu aqueux en présence des eaux à épurer, et plus particulièrement, un procédé basé sur le traitement consécutif des eaux à épurer avec de l'hydroxyde de fer (II) et de l'hydroxyde de fer (III), obtenus à partir de tôles de fer ou de riblons ou de copaux de ce métal, procédé qui permet d'épurer d'une façon pas très efficace les eaux résiduaires des ions de différents métaux lourds parce qu'il présente l'inconvénient consistant en ce qu'on ne peut produire qu'un seul type de coagulant et que le coagulant ainsi produit n'est pas homogène, en supplément du fait qu'en raison de son faible rendement, il exige une grande consommation d'énergie, 50-55 Joules approximativement pour l'obtention d'un milligramme de coagulant, et aussi l'inconvénient de sa faible vitesse de précipitation et de la nécessité de faire passer toute l'eau épurée à travers un filtre-presse pour séparer les hydroxydes de l'eau épurée, ce qui exige un équipement volumineux et compliqué, ainsi que la préparation de la solution dans un milieu aqueux avec des additions salines d'une certaine importance, qui réduisent la qualité des eaux traitées.

La présente invention prévoit un procédé pour épurer les eaux résiduaires industrielles et pour obtenir le réactif nécessaire pour l'épuration, du typa par lequel le traitement des eaux résiduaires à épurer s'effectue au moyen d'une solution appelée coagulant en réaction continue permanente, produite par la dissolution d'anodes métalliques qui peuvent être de différentes matières, dans une solution aqueuse par un moyen électrochimique, dans lequel le coagulant se forme par la dissolution des anodes en ions et hydroxydes de fer (II et III), avec des ions d'autres métaux, dans un élément conteneur appelé générateur-réacteur, caractérisé en ce que le générateur-réacteur mentionné est constitué par une série d'anodes et de cathodes solubles faites de plaques ou de grillages de fer à faible teneur en carbone, d'aluminium et d'autres matières, qui sont tous de compositions standards, et qui se mettent en connexion électrique positive et négative respective, dans une cuve destinée à être remplie d'une solution aqueuse contenant un acide et un sel, le générateur-réacteur étant équipé d'une entrée d'air qui se ramifie en sorties multiples réparties dans la partie inférieure du générateur-réacteur tandis qu'à son tour, ledit générateur-réacteur est doté d'un moyen de réfrigération forcée, à réglage manuel ou automatique, pour stabiliser la température à l'intérieur de la cuve pendant le processus électrolytique, en ce qu'il y a une insufflation périodique d'air injectée dans le coagulant qui se trouve à l'intérieur du générateur-réacteur au moyen de ladite entrée d'air en les zones de concentration de coagulant au fond du générateur-réacteur, et en ce que des boues actives sont formées au cours du procédé d'épuration dans le générateur-réacteur et il y a une recirculation forcée de l'eau dans le processus ensemble avec le coagulant et les boues actives formées.

Selon l'invention, on propose, comme nouvelle solution, un nouveau procédé qui utilise, en qualité de réactif pour épurer les eaux résiduaires, un réactif qui est représenté par une solution à réaction continue permanente sous l'effet d'une électrolyse produite dans un générateur-réacteur de construction spéciale, en faisant passer un courant continu entre les plaques qui forment ses anodes et ses cathodes, et que les matières qui composent ses plaques peuvent être standards ou spéciales, et que ledit réactif peut être réalisé selon deux versions : en présence des eaux résiduaires industrielles à épurer ou dans un milieu aqueux séparé de ces eaux, selon les contaminants qui existent dans ces dernières ; il réduit la consommation du coagulant engendré grâce à sa production plus concentrée et plus active et grâce à l'optimisation du processus d'épuration et à une exploitation totale de ses propriétés réductrices et d'absorption spécifiques ; en réalisant entre les zones de concentration du coagulant et des boues actives des corps spéciaux des réacteurs qui composent le système, une recirculation forcée de l'eau, du coagulant et des boues actives, au moyen d'une pompe et de ses vannes et canalisations correspondantes. L'exploitation optimale du coagulant (ou de la solution) mentionné plus haut est contrôlée en permanence, pour vérifier que ses propriétés réductrices et d'absorption sont actives, au moyen d'un pH-mètre et d'un rédoxymètre. Ce procédé améliore l'électrocoagulation, l'électrodispersion et le système de réactifs (physico-chimique) traditionnels et combine leurs avantages avec ceux des procédés d'échange d'ions, en apportant une solution à leurs défauts.

Avec les caractéristiques du système utilisé, on optimise le rendement du générateur-réacteur, de sorte qu'on a besoin de moins d'énergie pour obtenir un milligramme de réactif, environ 24,5 Joules, et que, pour réduire un milligramme de Cr⁶⁺, on a besoin de 3,5 milligrammes de Fe²⁺, c'est-à-dire 84 Joules, cependant qu'on doit conserver à l'esprit la constante de rendement qui peut être d'entre 1,15 et 2,5. De même, ceci améliore la relation entre l'intensité du courant électrique à utiliser dans l'électrolyse et la superficie des anodes, qui sera d'entre 2,5 et 6 A/dm². Il convient de souligner qu'avec ce nouveau procédé, on peut obtenir différent types de coagulants en utilisant différents types de plaques pour la composition de ses anodes et cathodes, du fait que la composition des matières desdites plaques commerciales sont standards, et que, par conséquent, les caractéristiques spécifiques de tous les types de coagulants obtenus par le système proposé sont garanties par la composition standard de leurs anodes et cathodes, puisqu'on conserve les même caractéristiques de conductibilité dans le fonctionnement du système.

Les anodes et cathodes qui composent les générateurs-réacteurs peuvent être permutées en polarité par action manuelle ou automatiquement, ce qui permet d'obtenir une consommation plus rationnelle de ces électrodes et d'en tirer un meilleur parti.

Le système proposé utilise différents types d'électrodes qui composent une partie du générateur-réacteur, lesquelles sont composées d'anodes et de cathodes solubles, et peuvent être faites de matériaux identiques ou différents, d'une composition standard ou spéciale, et, elles peuvent être constituées, par exemple : par des anodes et cathodes faites de plaques de fer à haute ou basse teneur en carbone, d'acier inoxydable, ou bien par des cathodes de composition d'aluminium et d'autres métaux.

Ce nouveau procédé proposé ici prévoit de maîtriser la corrélation entre le fer (II) et (III), et la solution à réaction continue s'effectue dans un générateur-réacteur préparé à cette fin, en ajoutant si nécessaire de petites quantités d'un chlorure d'un métal alcalin, de préférence du chlorure de sodium, lequel générateur-réacteur contient dans le cas où l'on utilise l'hydroxyde de fer dans ses variables (II et III), exprimé en g/l :
- des ions et hydroxydes de fer (II, III) au total 30-60 g/l (fer (II) : 80-90% et fer (III) 10-20%).
- ions de fer II en solution 20 g/l.
- chlorure d'un métal alcalin (Na) 80-250 mg/l.
et contient dans le cas où l'on utilise de l'hydroxyde d'aluminium dans ses variantes :
- X Al⁺³ 10-15%
- Y Al(OH)₃ . nH₂O 40-70%
- Z Al₂O₃.nH₂O 10-20%
- chlorure de métal alcalin. 80-250 mg/l

Ce procédé est destiné à l'épuration d'eaux résiduaires, de préférence en vue de l'élimination des ions de métaux lourds, y compris le Cr⁶⁺, par exemple pour épurer les eaux résiduaires des installations galvaniques et de revêtements métalliques, de revêtements organiques, de peinture, de l'industrie de la peau et de la tannerie, des industries textiles, des entreprises de métallurgie non ferreuse et autres, en se basant, pour sa réalisation, sur un générateur qui contient des anodes et des cathodes utilisées comme pôles positifs et négatifs, et à l'intérieur duquel on produit la solution mentionnée, et sur un réacteur d'une construction spéciale, composé d'une chambre ou de deux chambres et d'un bloc ou d'une chambre de floculation forcée.

La solution comportant une réaction permanente engendrée, favorise la réaction du Cr⁶⁺ et agit sur jusqu'à vingt-trois types de métaux lourds et elle agit en tant que sorbant sur les produits dérivés du pétrole tels que les huiles, graisses et phosphates. Pour les anodes solubles, ces caractéristiques se présentent comme résultat de la dilution dans le générateur-réacteur pour un milieu électrochimique de ces produits ; en outre, périodiquement, une insufflation d'air commandée, injectée dans le milieu, apporte la possibilité de faire passer à l'état trivalent entre 10-20% du fer dissous provenant de l'anode (dans le cas des anodes solubles). Les anodes précitées seraient composées de plaques de différentes épaisseurs de fer et d'acier de différentes compositions, dont la composition peut être standard ou spéciale, et les cathodes elles aussi constituées par des plaques ou grillages de ces matières ou d'autres, dont la composition peut être standard ou spéciale. Dans le cas où l'on utilise des anodes de fer, il se forme pendant l'hydrolyse des ions et hydroxydes de cette matière qui, dans le système colloïdal, ont des dimensions d'environ entre 1-10 mm, et une surface spécifique de 60-90 g/m², tandis que la densité de la solution est de 0,9-1,50 g/cm³.

La composition des particules dans le cas où l'on utilise des anodes et cathodes en fer est exprimée par la formule suivante :

Fe^{II}_{3,0-3,5} Fe^{III}_{1,0-0,5} Oₓ/OH/_{y} . nH₂O

où : 2X+Y=11-10,5 ; n=65-70, n étant : le nombre de particules d'eau, X : le nombre d'oxygènes , et Y : le nombre d'hydroxydes ; c'est-à-dire que les particules du système sont l'oxyhydrate de fer (II, III) en complexe, et une partie considérable de l'eau contenue dans le système se présente sous une forme liée. Ces caractéristiques donnent la possibilité d'atteindre le degré nécessaire d'épuration des eaux résiduaires, le Ph étant de 3-8,5.

Dans le cas où l'on utilise des cathodes et anodes solubles en fer, l'apport pratique d'énergie nécessaire pour dissoudre 1 ppm de Fe (II) est d'environ 4 coulombs, et il est avantageux, pour obtenir un bon rendement de l'électrolyte du générateur, de travailler dans l'intervalle de densité de courant d'entre 2,5 et 6 A/dm², les particules de la solution ou du coagulant ainsi obtenues possédant un grand pouvoir de réduction et une grande surface spécifique d'absorption et par conséquent une grande efficacité pour l'épuration des eaux résiduaires. Le traitement par l'insufflation d'air contribue à un brassage mécanique de la solution en cours de formation

Les réactions de réduction de Cr⁶⁺ (contenu dans des chromates et bichromates) en Cr³⁺ dans le système proposé se produisent et sont exprimés par :

Cr₂O₇²⁻ + 6Fe²⁺ + 14H⁺ « 6Fe³⁺ + 2Cr³⁺ + 7H₂O ;

Cr₂O₇ ²⁻ + 6Fe(OH)₂ + 7H₂O « 2Cr(OH)₃ + 6Fe(OH)₃ + 2OH⁻

Ces réactions aident aussi à la précipitation des métaux sous la forme d'hydroxydes (boue).

En outre, avec le procédé proposé, pendant le processus de l'électrolyse, la solution contenue dans le générateur s'alcalinise et favorise la production d'une boue solide active Fe(OH)₂ ayant une grande surface d'absorption qui facilite la précipitation des ions des métaux lourds.

Puisque la solution est obtenue à l'aide d'anodes solubles, en présence des eaux à épurer en supplément des réactions de réduction précédentes, il se produit aussi la réaction cathodique suivante du Cr⁶⁺ en Cr³⁺

Cr₂O²⁻₇ + 14H⁺ + 6e -> 2Cr³⁺ + 7H₂O ;

Selon ce procédé proposé, qui est composé d'un ou de plusieurs générateurs, avec leurs redresseurs correspondants ainsi que leurs réacteurs à une ou deux chambres, en formant ainsi un ensemble avec les première et deuxième chambres du réacteur, dans la première desquelles on effectue le contrôle du Ph et celui du rédox. La chambre de floculation forcée facilite la formation d'hydroxydes qui se décanteront sur le fond.

L'épuration des eaux résiduaires surpasse par son degré d'efficacité le coagulant que l'on obtient par le procédé connu de l'hydrodispersion, en diminuant ainsi l'équipement nécessaire et l'apport de solution saline dont la dilution ne sera pas de plus de 80-250 mg/litre, en évitant une salinité excessive qui serait préjudiciable à la réutilisation des eaux traitées, et elle améliore aussi la relation de l'intensité du courant électrique à utiliser pour l'électrolyse par rapport à la surface des anodes, qui sera d'entre 2,5 et 6 A/dm², et ceci améliore aussi le procédé de l'électrocoagulation, en obtenant une meilleure floculation et une meilleure clarification, grâce à une recirculation forcée.

Dans le cas de l'obtention de la solution ou du coagulant dans un milieu séparé des eaux contaminées, cette solution ou ce coagulant est produit en soumettant les anodes et cathodes à un courant continu dont la tension et l'intensité peuvent être de différentes valeurs, de sorte que, lorsque le courant passe à travers les pôles négatifs et positifs réunis par des plaquettes, il se produit une électrolyse qui transforme les composants utilisés comme anodes en hydroxydes et en libère des ions ; une fois transformés, un système d'aération oxyde, puisque l'on utilise des anodes solubles contenant du fer, une partie du Fe(OH)₂ en le convertissant en Fe(OH)₃, c'est-à-dire que ceci oxyde le liquide résultant en le convertissant en un sorbant ayant une aptitude à attirer des ions de jusqu'à vingt-trois types différents de métaux lourds, outre des huiles provenant de dégraissages, des dérivés du pétrole, des graisses, des phosphates, des détersifs, etc., en ajoutant en outre au moyen d'une pompe doseuse des quantités contrôlées de la solution au réacteur continu composé de deux corps avec une chambre de floculation, avec entrée dans la première préalablement à l'entrée des eaux à épurer qui circulent sous l'impulsion hydraulique d'une pompe qui réalise le mélange des eaux et de la solution par une agitation énergique et naturelle, et qui apporte la possibilité de faire monter cette solution jusqu'à la partie supérieure.

L'eau déjà épurée est contrôlée en permanence par un pH-mètre et un rédoxymètre et les solides en suspension au moyen d'un turbidimètre. Cette eau est transférée par trop-plein à la chambre de floculation forcée, en se mélangeant à ce moment avec un polyélectrolyte acheminé par une pompe doseuse en provenance de la cuve qui le contient. La configuration spéciale de la chambre de floculation assure un brassage énergique du mélange des eaux, du coagulant et du polyélectrolyte, lequel mélange est transféré au fond où les solides se déposent dans une partie conique cependant qu'une action de la pompe aspire et transfère la boue formée, déjà active, vers la partie inférieure de la première chambre du réacteur, en accroissant ainsi la vitesse de précipitation des particules contenues dans le fond de la deuxième chambre, pour la rendre supérieure à la vitesse d'ascension de l'eau épurée, et en obtenant ainsi que les particules ne parviennent pas à dépasser une certaine hauteur, pour créer une chambre libre de particules depuis cette hauteur jusqu'à la partie supérieure du déversoir de trop-plein de cette deuxième chambre du réacteur, où un turbidimètre mesure la qualité de l'eau obtenue, en ouvrant une vanne dans le cas où cette eau réunit les conditions nécessaires. Dans le cas contraire, cette vanne sera maintenue fermée et arrêtera la pompe d'impulsion.

Dans le cas où l'on utilise un réacteur pour charges discontinues, avec la solution ou le coagulant obtenu dans un milieu séparé des eaux contaminées, cette solution ou ce coagulant est ajouté en quantités contrôlées au réacteur pour charges discontinues en provenance d'une chambre prévue pour la pompe doseuse, en entrant dans cette chambre avant l'entrée des eaux à épurer qui circulent sous l'effet de la poussée hydraulique de la pompe qui réalise le brassage des eaux et de la solution au moyen d'une agitation énergique et naturelle, pour se mélanger ensuite avec un polyélectrolyte acheminé de façon dosée à partir de la cuve correspondante au moyen d'une pompe doseuse. La configuration spéciale de la chambre de floculation détermine un brassage énergique du mélange des eaux avec le coagulant et le polyélectrolyte, de sorte qu'il se produit un dépôt des hydroxydes engendrés, sur le fond où ils se déposent dans une partie conique, cependant qu'une pompe de recirculation aspire dans le fond de cette chambre et transfère la boue formée, déjà active, vers le partie conique inférieure de cette chambre, en augmentant ainsi la vitesse de précipitation des particules contenues dans le fond de cette chambre, ainsi que celle des hydroxydes, et en tirant un meilleur parti des boues actives. Ceci apporte la possibilité d'une clarification optimale de l'eau épurée et la séparation des boues engendrées. L'eau maintenant épurée est contrôlée en permanence par un pH-mètre et un rédoxymètre. Cette eau est transférée en chute libre dans une cuve. Avant cette opération, un turbidimètre mesure la qualité de l'eau obtenue, en ouvrant une électrovanne dans le cas où cette eau réunit les conditions nécessaires et une autre électrovanne dans le cas contraire, pour que l'eau revienne à la cuve initiale pour subir un traitement ultérieur.

Une autre variante du procédé consiste dans l'entrée et la sortie en continu des effluents contaminés, dans un générateur-réacteur et en ce que, au moyen d'un processus électrolytique, alimenté par son redresseur de courant continu, on engendre une solution en réaction continue permanente, ce qui peut être réalisé avec des anodes solubles et insolubles sous l'effet d'une électrolyse à laquelle on ajoute une petite quantité d'un chlorure d'un métal alcalin (principalement du chlorure de sodium), afin d'élever la conductibilité électrique jusqu'à des valeurs minimales de 5 µS/cm⁻¹, qui peuvent varier selon les eaux à traiter, et qui reste dans la solution, ce qui retarde les processus de vieillissement et favorise le processus d'électrolyse.

Dans cette variante, l'épuration des eaux résiduaires exécutée par la solution précitée en réaction continue permanente est réalisée en une étape, à la différence d'autres systèmes qui utilisent au minimum deux étapes. Dans le procédé objet de l'invention, les eaux résiduaires sont traitées de façon continue, par entrée et sortie permanentes de ces eaux dans le générateur-réacteur.

Dans ce cas où l'on obtient la solution ou le coagulant en présence des eaux contaminées, cette solution ou ce coagulant est produit en soumettant les anodes et cathodes, qui peuvent être solubles ou insolubles, à un courant continu dont la tension et l'intensité peuvent être de différentes valeurs, de telle manière que, lorsque le courant passe à travers les pôles positifs et négatifs réunis au moyen de plaquettes, on engendre en permanence la solution ou le coagulant. Le mélange des eaux et de la solution parvient au générateur-réacteur sous l'action d'une pompe d'impulsion à travers un conduit, pour passer ensuite, sous l'effet de l'impulsion hydraulique, au réacteur continu à deux corps et à chambre de floculation, en entrant dans le premier de ceux-ci. Sous l'effet de l'impulsion hydraulique de la pompe, il s'effectue le brassage des eaux au moyen d'une agitation énergique et naturelle, ce qui permet à ces eaux de s'élever jusqu'à la partie supérieure de la chambre. L'eau maintenant épurée est contrôlée en permanence par un pH-mètre et un rédoxymètre. Cette eau se transfère par trop-plein à la chambre de floculation forcée, en se mélangeant à ce moment avec un polyélectrolyte acheminé en quantités dosées à partir de la cuve correspondante par la pompe doseuse. La configuration spéciale de la chambre de floculation détermine un brassage énergique du mélange des eaux, du coagulant et du polyélectrolyte, de sorte que le mélange est transféré au fond, où les solides se déposent dans une partie conique, tandis que l'action d'une pompe aspire dans le fond de ladite chambre et transfère la boue formée, déjà active, par un conduit, jusqu'à la partie inférieure d'une des chambres du générateur, en augmentant la vitesse de précipitation des particules contenues dans le fond de l'autre chambre, pour la rendre supérieure à la vitesse d'ascension de l'eau épurée, pour obtenir ainsi que lesdites particules ne parviennent pas à dépasser une certaine hauteur, en créant ainsi une chambre libre de particules à partir de cette hauteur, jusqu'à la partie supérieure du déversoir de trop-plein de la chambre, où un turbidimètre mesure la qualité de l'eau obtenue, en ouvrant une vanne dans le cas où celle-ci réunit les conditions nécessaires. Dans le cas contraire, la vanne restera fermée et arrêtera la pompe d'impulsion.

Dans le cas où l'on utilise un réacteur pour charges discontinues, avec obtention de la solution ou du coagulant en présence des contaminées, cette solution ou ce coagulant est engendré en permanence par le fait qu'un courant circule entre les anodes et les cathodes qui forment le générateur-réacteur en présence des eaux à épurer. Les eaux parviennent au générateur-réacteur sous l'effet de l'impulsion hydraulique d'une pompe et, par un conduit, elles parviennent au réacteur pour charges discontinues qui détermine le brassage des eaux et de la solution au moyen d'une agitation énergique et naturelle, pour les mélanger ensuite avec un polyélectrolyte acheminé en une quantité dosée à partir de la cuve correspondante, sous l'action d'une pompe doseuse, et avec une agitation mécanique ou pneumatique. Ensuite, dans la même chambre, on effectue un brassage de l'eau avec un polyélectrolyte, ce qui, après agitation, détermine le dépôt des hydroxydes engendrés au fond de la chambre, ces substances se déposant dans une partie conique, pendant que l'action d'une pompe de recirculation aspire le coagulant dans le fond de la chambre précitée et le transfère avec la boue active jusqu'à la partie conique inférieure de cette chambre, en augmentant la vitesse de précipitation des particules contenues dans le fond de cette chambre, ce qui augmente la vitesse de précipitation des hydroxydes et permet une meilleure exploitation des boues actives. Ceci rend possible une clarification de l'eau épurée et la séparation des boues engendrées. Dans son processus d'épuration, l'eau est contrôlée en permanence par un pH-mètre et un rédoxymètre, jusqu'à l'élimination totale des éléments contaminants. Cette eau se transfère par chute libre, par un conduit, à la cuve collectrice. Préalablement, un turbidimètre contrôle l'absence de solides en suspension et mesure la qualité de l'eau obtenue, en ouvrant une électrovanne dans le cas où cette eau réunit les conditions nécessaires et une autre électrovanne dans le cas contraire, pour que l'eau retourne à la cuve initiale pour son traitement ultérieur.

Dans les générateurs-réacteurs objet de l'invention, comme partie du tout, à la différence de ceux qui sont déjà connus, on produit une solution dans un milieu aqueux en présence des eaux à épurer. On prévoit d'ajouter à cette solution un concentré acide ou salin, ou des deux types, selon les eaux résiduaires à traiter, et, par une électrolyse, lorsqu'on utilise des anodes solubles, en fer ou aluminium, on favorise leur dissolution dans le milieu, ce qui produit une réaction continue permanente dans ladite solution en union étroite avec les effluents à épurer, ou séparément de ces derniers, laquelle réaction est capable de réduire le Cr⁶⁺ en Cr³⁺ en milieu acide, neutre ou alcalin et, sous l'effet de cette réaction et d'une aération forcée, d'agir sur jusqu'à vingt-trois types de métaux lourds, et donc sur ceux qu'on trouve dans les eaux résiduaires, et aussi sur des produits dérivés du pétrole tels que des huiles, graisses, etc., ainsi que sur les phosphates et autres.

Lorsque la solution se forme à l'intérieur du générateur, dans un milieu liquide séparé, elle est envoyée par une pompe doseuse pour être injectée par parties dans la chambre de réduction du réacteur à deux corps, comprenant une chambre de floculation de construction spéciale, et pour se réunir aux eaux résiduaires industrielles à traiter qui passent dans cette chambre, sous l'effet de l'impulsion d'une pompe, en restant à l'intérieur des deux pendant un temps pré-établi, les valeurs de pH et de rédox étant auto-contrôlées en permanence et comparées aux valeurs introduites dans l'armoire de commande commandée par un PLC ; cette auto-comparaison détermine et vérifie que la réaction produite agit sur les ions des métaux lourds en suspension ainsi que sur les dérivés du pétrole contenus dans les eaux, tels que les graisses et huiles, phosphates, colorants, etc..

En outre, lorsque la solution se forme de la même façon que dans le cas où la solution ou le coagulant est obtenu dans le milieu séparé, cas décrit plus haut, à l'intérieur du générateur, elle est envoyée par une pompe doseuse pour être injectée partiellement dans la chambre de réduction du réacteur de construction spéciale et se réunir aux eaux résiduaires industrielles à traiter qui parviennent à cette chambre, sous l'effet de l'impulsion d'une pompe, et avec le polyélectrolyte envoyé au moyen d'une autre pompe en provenance de la cuve correspondante, en restant dans cette chambre pendant un temps pré-établi, cependant que les valeurs de pH et de rédox, et des solides en suspension sont auto-contrôlées en permanence au moyen d'un turbidimètre, en les comparant avec les valeurs introduites dans l'armoire de commande commandée par un PLC ; cette auto-comparaison détermine et vérifie que la réaction produite agit sur les ions des métaux lourds en suspension ainsi que sur les dérivés du pétrole contenus dans les eaux, comme les graisses et huiles, phosphates, colorants, etc..

Egalement comme élément différenciateur, la solution peut être produite à l'intérieur du générateur-réacteur en présence des eaux résiduaires individuelles à traiter, par le fait que lesdites eaux sont envoyées par la pompe d'impulsion, au travers de la partie inférieure du générateur-réacteur, en obligeant l'eau contaminée à passer à travers les anodes et cathodes jusqu'à obtenir la réduction de Cr⁶⁺ (contenu dans des chromates et bichromates) en Cr³⁺ , avant de sortir du générateur sous l'effet de l'impulsion hydraulique de la pompe et de parvenir à la première chambre de réacteur à deux corps possédant une chambre de floculation, de construction spéciale ; cependant que les valeurs de pH et de rédox, et des solides en suspension sont auto-contrôlées en permanence au moyen d'un turbidimètre, en les comparant avec les valeurs introduites dans l'armoire de commande commandée par un PLC ; cette auto-comparaison détermine et vérifie que la réaction produite agit sur les ions des métaux lourds en suspension ainsi que sur les dérivés du pétrole contenus dans les eaux, comme les graisses et huiles, phosphates, colorants, etc..

On obtient une variante de la description qui précède lorsque la solution est produite à l'intérieur du générateur-réacteur en présence des eaux résiduaires individuelles à traiter, par le fait que lesdites eaux sont envoyées par la pompe d'impulsion, au travers de la partie inférieure du générateur-réacteur, en obligeant l'eau contaminée à passer à travers les anodes et cathodes jusqu'à obtenir la réduction de Cr⁶⁺ (chromates et bichromates) en Cr³⁺ , avant de sortir du générateur sous l'effet de l'impulsion hydraulique de la pompe et de parvenir à la chambre de réacteur de construction spéciale, cependant que les valeurs de pH et de rédox, et des solides en suspension sont auto-contrôlées en permanence au moyen d'un turbidimètre, en les comparant avec les valeurs introduites dans l'armoire de commande commandée par un PLC ; cette auto-comparaison détermine et vérifie que la réaction produite agit sur les ions des métaux lourds en suspension ainsi que sur les dérivés du pétrole contenus dans les eaux, comme les graisses et huiles, phosphates, colorants, etc..

Le générateur-réacteur proposé, considéré dans ses différentes variantes, inclut un système d'addition d'air par lequel le liquide résultant, par exemple dans le cas où l'on utilise le fer, s'oxyde, jusqu'à ce qu'entre 10 et 20 % du fer dissous provenant des anodes passe de Fe_{(II)} à Fe_{(III)}, de sorte qu'on obtient un sorbant capable d'attirer et de réduire les ions de la plupart des métaux lourds contaminants, en supplément d'huiles provenant de dégraissages, de dérivés du pétrole, de graisses, phosphates, colorants, détersifs, etc.. En supplément, à l'intérieur du générateur, peut être incorporé, dans certaines de ses configurations, un système de réfrigération constitué par un serpentin, réuni à un circuit d'eau ou d'autre substance, ou encore on peut constituer un autre système de réfrigération pour maintenir une température stable à l'intérieur du générateur.

Avec ces générateurs-réacteurs et en tant que partie du système proposé, on obtient donc des avantages incontestables pour le déroulement du traitement d'épuration des eaux résiduaires auquel le système est destiné, de sorte que ce dernier acquiert une vie propre par lui-même et un caractère préféré pour ladite fonction.

Pour illustrer l'invention, on expose les exemples suivants dans lesquels les essais seront réalisés dans des conditions statiques, dans un réacteur de laboratoire d'un volume de 1 litre.

La durée du contact des eaux résiduaires avec la solution obtenue dans un milieu séparé et la solution en contact avec le milieu électrochimique était de 10 minutes. Les résultats des analyses ont été obtenus au moyen du procédé de spectroscopie d'absorption atomique.

Les exemples I-XI étant exécutés selon le procédé connu et les exemples XII-XV par le procédé selon l'invention, sur lesquels
1- indique le numéro de l'exemple,
2- les impuretés, leurs concentrations initiales en mg/l.
3- La dose du coagulant par le procédé de l'hydrodispersion, en mg/l, He/l ou en ml.
4- Les concentrations restantes des impuretés en g/l.

| Exemples selon le procédé connu | | | |
|---|---|---|---|
| 1 | 2 | 3 | 4 |
| I | Cr^{VI} 62,4 | Coagulant | 0,1 |
| | Zn²⁺ 41,8 | 300 mg/l ou 10 ml | 0,1 |
| | Cu²⁺ 18,9 | | 0,1 |
| | Ni²⁺ 28,2 | | 0,1 |
| II | Complexes avec | Coagulant | |
| | éthylènediaminoté-traacétique | 300 mg/l ou 10 ml | |
| | Zn²⁺ 41,8 | | |
| | Cu²⁺ 18,9 | | 12,5 |
| | Ni²⁺ 28,2 | | 5,7 |
| | | | 8,5 |
| III | Complexes avec | Coagulant | |
| | l'acide vinylacétique | 300 mg/l ou 10 ml | |
| | Zn²⁺ 41,8 | | |
| | Cu²⁺ 18,9 | | 8,4 |
| | | | 3,8 |
| IV | Pb²⁺ 15,2 | Coagulant | 5,1 |
| | Cd²⁺ 8,1 | 300 mg/l ou 10 ml | 3,7 |
| V | Cr^{VI} 60,0 | | 0,02 |
| | Zn²⁺ 60,0 | | 0,02 |
| | Cu²⁺ 27,0 | | 0,02 |
| | Ni²⁺ 35,2 | | 0,02 |
| VI | Complexes avec | 300 mg/l ou 10 ml | |
| | éthylènediaminoté-traacétique | | |
| | Zn²⁺ 35,0 | | 0,05 |
| | Cu²⁺ 21,0 | | 0,05 |
| | Ni²⁺ 22,0 | | 0,05 |
| VII | Complexes avec l'acide vinylacétique | | |
| | Zn²⁺ 30,0 | | |
| | Cu²⁺ 18,2 | | 0,05 |
| | | | 0,05 |
| VIII | Pb²⁺ 35,0 | idem | 0,05 |
| | Cd²⁺ 20,0 | | 0 |
| IX | Cr^{VI} 60,0 | Hydrodispersion | 0,02 |
| | Zn²⁺ 60,0 | | 0,02 |
| | Cu²⁺ 27,0 | | 0,02 |
| | Ni²⁺ 35,2 | | 0,02 |
| X | Ni²⁺ 15,0 | | 0,02 |
| | Pb²⁺ 12,0 | | 0,05 |
| | Cd²⁺ 10,5 | | 0,05 |
| XI | Pb²⁺ 250,0 | Hydrodispersion avec 200 mg/l dans la 1ère étape et 50 mg/l dans la 2ème | 1ère étape 2,5 |
| | | | |
| | | | 2ème étape |
| | | | |
| | | | 0,05 1ère étape 0,7 |
| | Cd²⁺ 75,0 | | 2ème étape 0,01 |

| Exemples selon le procédé de l'invention | | | |
|---|---|---|---|
| 1 | 2 | 3 | 4 |
| XII | Cr^{VI} 8,4 | après 10 min | 0,01 |
| | Zn²⁺ 6,1 | | 0,01 |
| | Cu²⁺ 9,2 | | 0,01 |
| | Ni²⁺ 51,3 | | 0,10 |
| | Fe 15,7 | | 0,01 |
| XIII | Cr^{VI} 22,6 | après 10 min | 0,01 |
| | Zn²⁺ 29,2 | | 0,02 |
| | Cu²⁺ 15,4 | | 0,01 |
| | Ni²⁺ 11,2 | | 0,01 |
| | Fe 31,1 | | 0,03 |
| XIV | Zn²⁺ 16,3 | après 10 min | 0,02 |
| | Cu²⁺ 13,4 | | 0,02 |
| XV | Pb²⁺ 15,2 | après 10 min | 0,02 |
| | Cd²⁺ 12,5 | | 0,03 |

Le système modulaire proposé ici, conforme à l'objet de l'invention, permet de réaliser les fonctions suivantes avec des avantages incontestables.

Absorption et réduction de Cr⁶⁺ contenu dans les chromates et bichromates, en Cr³⁺, en milieu acide, neutre ou alcalin, en présence d'autres ions de métaux lourds tels que Cr, Ni, Cu, Zn, Fe, etc.. Transformation de tous les ions de tous les métaux lourds contenus dans les eaux à épurer en hydroxydes de métaux et leur précipitation en une seule opération à une même valeur de pH, puisque le coagulant engendré favorise des courbes de dépôt plus proches des différents métaux.

Réduction de Cr⁶⁺ contenu dans les chromates et bichromates, en Cr³⁺, en milieu acide, neutre ou alcalin, en présence d'autres ions de métaux lourds tels que Cr, Ni, Cu, Zn, Fe, etc. en une seule opération et à une unique valeur de pH, absorption d'huiles, détersifs, graisses, phosphates, matières organiques (dans des proportions déterminées), surtout sous l'effet des anodes solubles en aluminium.

L'épuration de tous les ions de métaux lourds exempts de cyanures s'effectue simultanément par l'apport d'une solution spécifique produite dans un ou plusieurs générateurs-réacteurs.

L'épuration de tous les ions de métaux lourds contenus dans les eaux à épurer exemptes de cyanures peut aussi s'effectuer simultanément par passage de ces eaux dans un ou plusieurs générateurs-réacteurs et en faisant passer l'eau contaminée à travers ces derniers et en utilisant pour cela une énergie électrique à courant continu qui affecte leurs anodes et cathodes.

Le transfert de tous les effluents exempts de cyanures s'effectue par une même conduite.

Grâce à sa technologie élaborée qui engendre très peu de salinité, une proportion d'entre 60 % et 80 % du débit d'eau d'entrée peut être recyclée pour la production, le reste pouvant être exploité pour d'autres traitements contigus de fabrication etc..

Pendant le traitement, la teneur en sulfates de l'eau diminue d'entre 15 et 20 %.

Pendant le traitement, la teneur de l'eau en phosphates diminue d'entre 60 et 98 %.

Pendant le traitement, la teneur en nitrates et en chlorures diminue d'environ 15 %.

Pendant le traitement, la teneur de l'eau en DCO (demande chimique d'oxygène) diminue d'entre 20 % et 60 %.

Les résidus solides provenant de la floculation normale du procédé ne sont généralement pas toxiques et, par application d'un traitement additionnel effectué dans un processus parallèle, ces boues, déjà rendues inertes, peuvent être utilisées pour la fabrication de matériaux de construction, céramiques, verres, peintures, matériaux isolants, etc., grâce à leur toxicité faible ou même nulle.

Du fait qu'on ajoute moins de sels et qu'on évite la chaux qui est utilisée pour faciliter la précipitation dans les procédés connus, le volume de résidus solides (boues) est sensiblement plus réduit que dans ces procédés.

Grâce à la solution de réaction continue permanente, engendrée par électrolyse, les flocules qui se forment sont plus gros et plus lourds que dans les procédés traditionnels connus, ce qui augmente la vitesse de précipitation.

La floculation est améliorée grâce aux conditions optimales de floculation et à l'absorption due à l'effet du système de recirculation forcée, en améliorant ainsi les conditions de sédimentation des petits grumeaux floculés.

L'avantage du système a une influence sur la qualité de l'eau épurée, en permettant une meilleure salinisation, ce qui se traduit par le fait qu'on en tire un meilleur parti et permet de respecter amplement les normes de rejet les plus strictes et n'exige aucun traitement additionnel, sauf dans les cas très isolés.

L'invention assure une simplification de l'automatisation du processus d'épuration, grâce à la commande par ordinateur de toutes les fonctions de l'installation.

L'invention assure en outre une réduction de la consommation de réactifs principaux et secondaires parce qu'il obtient une solution engendrée sous une forme plus active et plus concentrée, cette consommation étant très inférieure à celle employée par les procédés connus, grâce au fait qu'on a moins à faire varier le pH et grâce à l'absence pratique de salinisation.

La solution, grâce à ses caractéristiques spéciales dans la réaction, apporte des éléments très utiles dans le traitement de eaux résiduaires qui contiennent des complexes de métaux, en simplifiant leur épuration grâce au fait qu'elle agit aussi bien sur les anions que sur les cations contenus dans les complexes tels que les pyrophosphates, tartrates, citrates, composés ammoniacaux, etc..

En outre, l'invention permet d'obtenir une réduction extrême de l'équipement nécessaire et de la surface occupée pour son implantation, grâce à son principe de construction modulaire et à l'emploi du générateur-réacteur.

La figure 1 représente le schéma général, selon un exemple de réalisation de l'installation du système proposé.

La figure 2 représente le schéma général, selon un autre exemple de réalisation de l'installation du système.

La figure 3 représente un autre exemple du schéma général de l'installation du système.

LA figure 4 représente un autre exemple du schéma général de l'installation du système.

La figure 5 représente l'ensemble général de construction du réacteur utilisé dans l'installation.

La figure 6 représente l'ensemble général de construction du même réacteur selon une variante.

La figure 7 représente l'ensemble général de construction d'un autre exemple de réalisation du réacteur.

La figure 8 représente l'ensemble général de construction du même réacteur selon une variante.

La figure 9 est une représentation de l'ensemble du générateur utilisé dans le système, selon une vue de profil, avec la moitié en coupe, et une vue latérale correspondante entièrement en coupe.

La figure 10 est une représentation d'un ensemble générateur-réacteur selon l'invention.

### LISTE DES REFERENCES

1- Cuve d'homogénéisation
2- Canalisation d'entrée d'acides actifs dosés
3- Canalisation d'entrée de concentrés alcalins dosés
4- Canalisation d'entrée d'effluents de lavage
5- Pompe d'impulsion
6- Générateur
7- Redresseur
8- Pompe doseuse de coagulant
9- Canalisation de conduite du coagulant
10- Pompe doseuse d'acide
11- Cuve d'acide
12- Conduite de l'acide
13- Pompe doseuse de soude
14- Cuve de soude
15- Conduite de soude
16- Pompe doseuse de polyélectrolyte
17- Cuve de polyélectrolyte
18- Conduite du polyélectrolyte
19- Contrôleur de pH
20- Contrôleur de rédox
21- Chambre de réduction et de mélange
22- Chambre de floculation
23- Chambre de séparation et de clarification
24- Conduite des effluents
25- Pompe de recirculation
26- Conduite de sortie des boues
27- Conduite de recirculation
28- Conduite d'eau épurée
29- Cuve d'eau épurée
30- Conduite d'eau jusqu'au filtre à sable ou à charbon
31- Pompe d'impulsion d'eaux épurées
32- Filtre à sable ou à charbon actif
33- Débitmètre
34- Conduite de l'eau épurée aux lignes
35- Accumulateur de boues
36- Conduite d'eau contenant des particules aux cuves d'homogénéisation
37- Conduite de boues au filtre-presse
38- Pompe du filtre-presse
39- Filtre-presse
40- Conduite d'eau sortant du filtre-presse
41- Conteneur de boues
42- Anodes
43- Cathodes
44- Conduite d'évacuation des boues engendrées dans la chambre de réaction
45- Conduite de vide
46- Zone de mélange et de réaction
47- Pales agitatrices
48- Zone de séparation d'hydroxydes
49- Zone de clarification
50- Conduite de vide
51- Electrovanne
52- Electrovanne
53- Electrovanne
54- Electrovanne
55- Electrovanne
56- Electrovanne
57- Turbidimètre
58- Electrovanne
59- Vanne double
60- Vanne double
61- Canalisation de liaison
62- Canalisation de recirculation
63- Canalisation d'évacuation
64- Conduite de retour à la cuve d'homogénéisation
65- Electrovanne
66- Electrovanne
67- Flotteur
68- Canalisation d'évacuation de l'eau épurée du réacteur
69- Electrovanne
70- Conduite d'air
71- Electrovanne double
72- Générateur-réacteur
73- Redresseur
74- Anodes
75- Réacteur à un corps
76- Cathodes
77- Vanne de commande d'entrée d'eau
78- Vanne de commande de sortie d'eau
79- Electrovanne
80- Zone de réaction
81- Conduite d'air
82- Serpentin
83- Zone d'accumulation de coagulant
84- Plaquettes positives du générateur
85- Plaquettes négatives du générateur
86- Conduite d'évacuation
87- Plaquettes positives du réacteur-générateur
88- Plaquettes négatives du réacteur-générateur
89- Zone de réaction

L'invention se rapporte à un procédé pour l'épuration d'eaux résiduaires provenant de différentes industries, qui se base sur un processus de traitement des eaux résiduaires contenant des hydroxydes et des ions de divers métaux, parmi lesquels le fer (II et III), l'aluminium, le titane, l'iridium, le plomb, le graphite et d'autres, qui sont produits dans une solution liquide conductrice en présence des eaux à traiter ou séparément de celles-ci, et que, sous l'effet d'une électrolyse réalisée dans un générateur-réacteur et où, au moyen de la réaction produite dans une solution saline sous l'effet de l'action de l'électrolyse, libère les hydroxydes et ions mentionnés plus haut capables d'effectuer la réduction de Cr⁶⁺ en Cr³⁺ en milieu acide, neutre ou alcalin, l'absorption de métaux lourds tels que Cr, Ni, Cu, Zn, Fe, etc., en une seule opération et à une seule et même valeur de Ph, l'absorption des huiles, détersifs, graisses, phosphates, matières organiques, etc., contenus dans les eaux résiduaires à épurer.

Le procédé de l'invention comprend une armoire électrique, avec son ordinateur correspondant, qui commande toutes les fonctions qui se réalisent pendant le processus d'épuration en conjuguant les ordres et en transmettant les signaux adéquats pour la mise en marche des différentes pompes et en favorisant l'ouverture et la fermeture des électrodes qui composent le circuit.

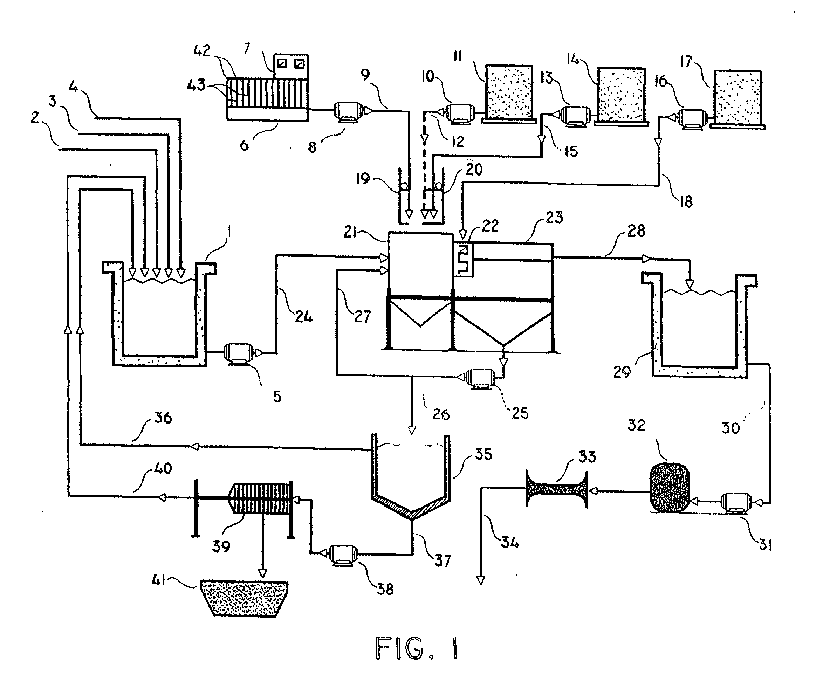

Il est à remarquer que le signal proposé peut être composé de différents composants et équipements, comme représenté sur les figures 1 à 10, ce système pouvant être constitué par différents générateurs-réacteurs 6 et 72, figures 1, 2, 3, 4, 9 et 10, avec leurs redresseurs correspondants 7 et 73, figures 1, 2, 3, 4 et 10, à différentes tensions et différentes intensités, ainsi qu'avec différents réacteurs possédant un ou plusieurs corps 21, 22, 23 et 75, figures 1, 2, 3, 4, 5, 6, 7 et 8, ainsi que leurs pompes, vannes, électrovannes correspondantes, armoires de commande et différentes conduites, le tout conçu en construction modulaire.

Les eaux à épurer (figure 1) entrent par le conduit 4, en se mélangeant dans la cuve 1 avec les concentrés dosés acides et alcalins qui parviennent par les conduits 2 et 3. Ensuite, la pompe 5, au moyen du conduit 24, commence à introduire ses effluents homogénéisés dans la chambre 21, moment où la pompe 8, au moyen de son conduit 9, apporte une portion contrôlée du coagulant fabriqué qui se mélange énergiquement avec les effluents sous l'effet de l'impulsion hydraulique de la pompe 5, en remplissant la chambre 21 qui effectue un processus d'agitation, réduction, mélange et ajustement du Ph par l'addition de soude ou d'acide provenant des cuves 11, 14 et de leurs pompes doseuses respectives 10, 13, par les conduits 12, 15 pour s'écouler ensuite, par trop-plein, dans la chambre de floculation 22 à laquelle on lui ajoute le polyélectrolyte nécessaire provenant de la cuve 17 au moyen de la pompe doseuse 16, en passant par le conduit 18, en vue de son mélange et de sa floculation ultérieure, une partie des hydroxydes formés restant dans le fond de la chambre 23, le système de recirculation forcé produit au moyen de la pompe 25 et de ces conduites 27 correspondantes commençant à fonctionner.

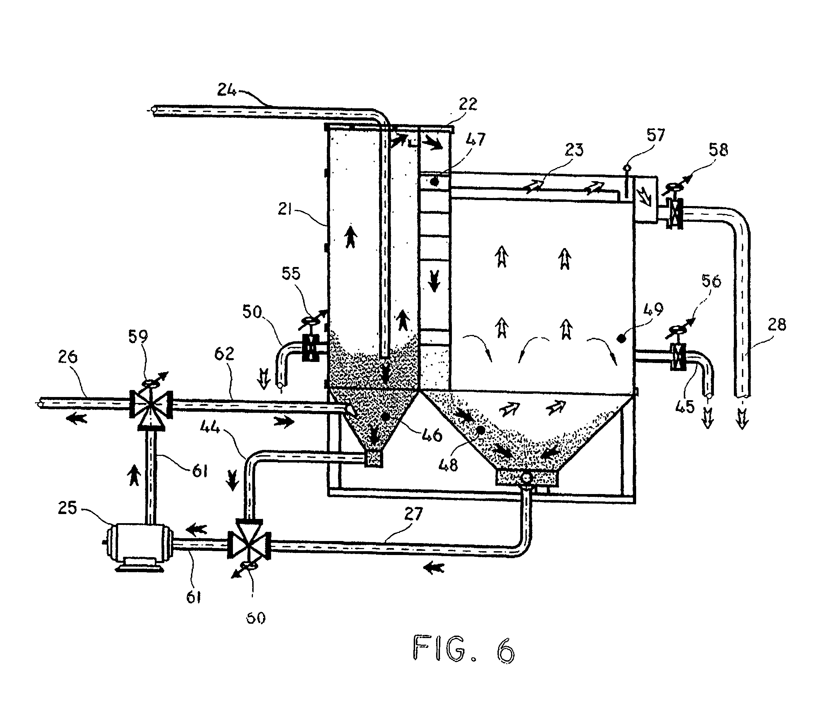

Les eaux s'écoulent vers la partie supérieure de la chambre 23 en créant des zones de séparation de boues et de clarification de celles-ci, zones contrôlées continuellement au moyen du pH-mètre 19, du rédoxymètre 20 et du turbidimètre 57. Si les résultats de ces contrôles sont positifs, l'électrovanne 58 s'ouvre (figure 6) en laissant l'eau s'écouler par la canalisation 28 vers la cuve d'accumulation d'eau épurée 29, pour être envoyée ensuite et depuis cette cuve, par le conduit 30, sous l'effet de la pompe 31, à travers le filtre à sable ou à charbon 32 et à travers le débitmètre 33, vers les lignes de production en passant par le conduit 34.

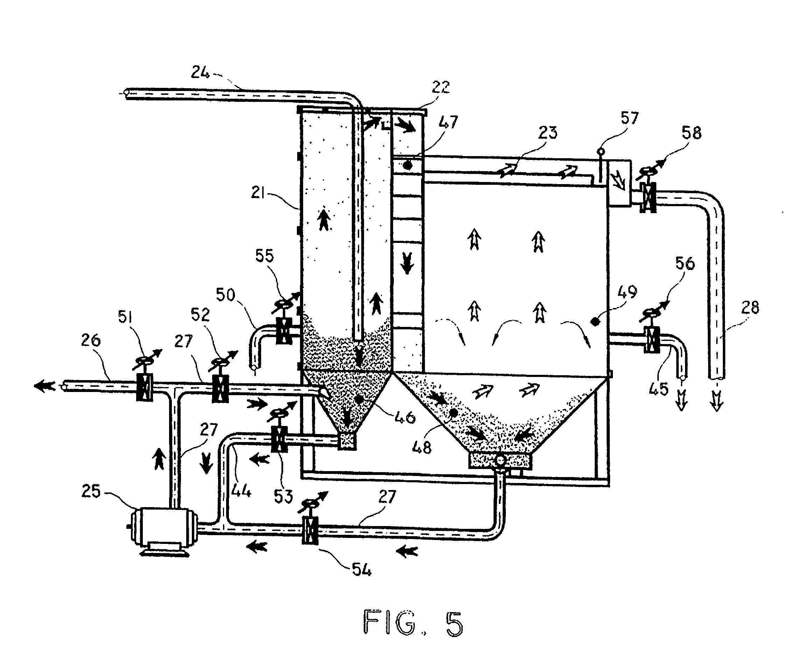

D'un autre côté, en ce qui concerne les boues et hydroxydes formés dans la partie inférieure des chambres 21 et 23, zones 46 et 48 (figures 5 et 6), lorsque les éléments de contrôle indiquent qu'elles ont perdu leur capacité de réduction et d'absorption, ces substances sont automatiquement évacuées vers le décanteur de boues 35 par la conduite 26 sous l'effet de la pompe 25 et des canalisations et électrovannes qui composent cet ensemble de recirculation et d'évacuation. Les boues déposées dans le décanteur sont transférées par la canalisation 37, sous l'effet de la pompe 38, au filtre-presse 39 pour subir leur déshydratation et leur compactage final. L'eau sortant de ce processus est renvoyée en tête, au moyen de la canalisation 40, à la cuve d'homogénéisation, le processus se terminant par la collecte des gâteaux produits dans le filtre-presse 39 et dans le conteneur 41 en vue de leur évacuation vers une décharge industrielle contrôlée.

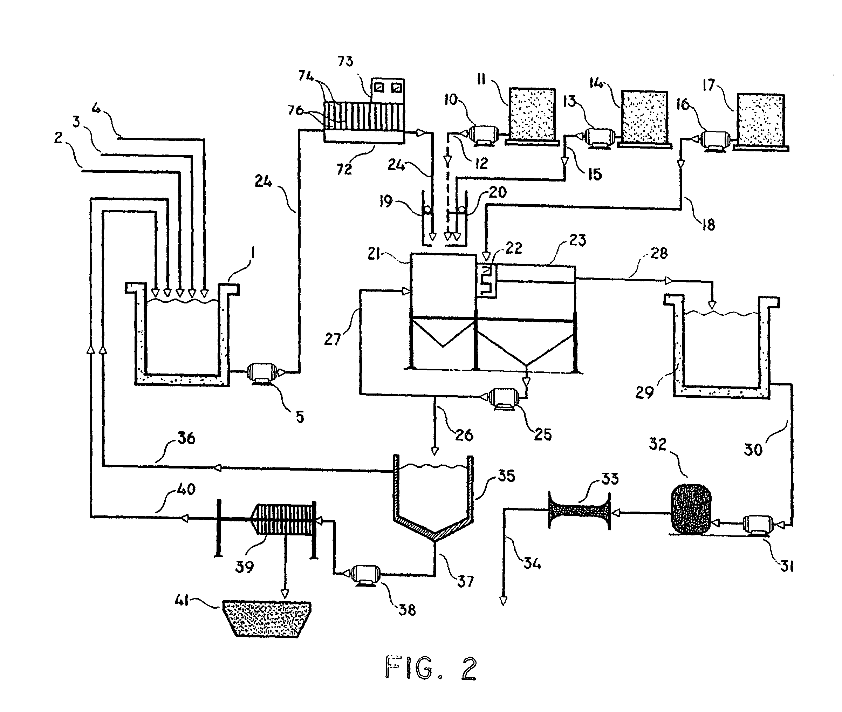

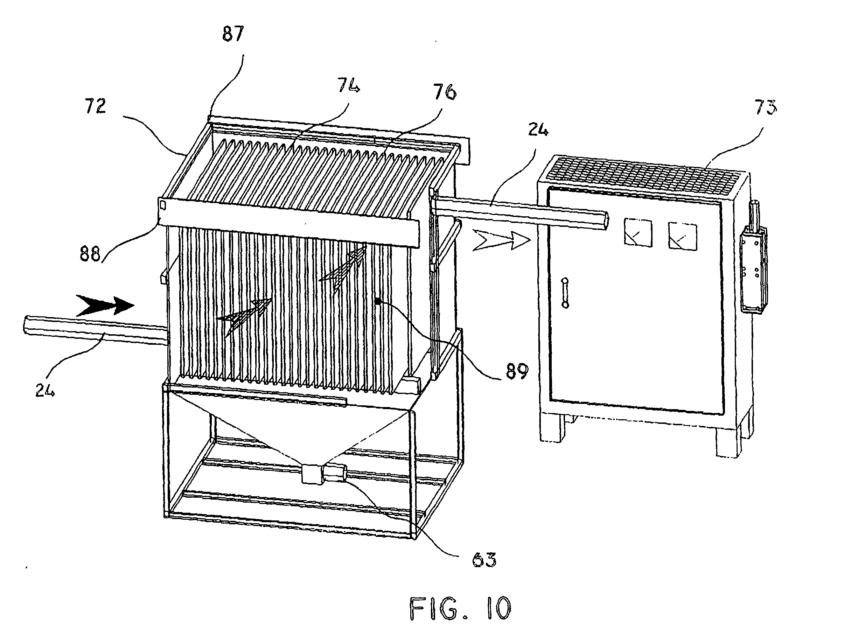

Dans le cas de la figure 2, les eaux à épurer entrent par le conduit 4, en se mélangeant dans la cuve 1 avec les concentrés dosés, acides et alcalins qui parviennent par les conduits 2 et 3. Ensuite, la pompe 5, en passant par le conduit 24, commence à introduire ces effluents homogénéisés dans la partie inférieure du générateur-réacteur 72, en fonctionnement au moyen de son redresseur 73 (figures 2 et 10) en les obligeant à passer à travers les anodes et cathodes 74 et 76, solubles, et sa zone de réaction 89 (figure 10) pour parvenir à la partie supérieure du générateur-réacteur et sortir par le conduit préparé à cet effet 24, en remplissant la chambre 21 qui, dans ce cas, effectue un processus d'agitation, mélange et ajustement du Ph par l'addition de soude ou d'acide provenant des cuves 11, 14 et de leurs pompes doseuses respectives 10, 13, pour s'écouler ensuite, par trop-plein, dans la chambre de floculation 22 à laquelle on y ajoute le polyélectrolyte nécessaire, en provenance de la cuve 17, au moyen de la pompe doseuse 16, en vue de son mélange et de sa floculation ultérieurs, une partie des hydroxydes formés restant au fond de la chambre 23, le système de recirculation forcé produit au moyen de la pompe 25 et de ses conduites correspondantes commençant à fonctionner.

Les eaux s'écoulent vers la partie supérieure de la chambre 23 en créant des zones de séparation de boués et de clarification de celles-ci, continuellement contrôlées au moyen du pH-mètre 19, du rédoxymètre 20 et du turbidimètre 57. Si les résultats de ces contrôles sont positifs, l'électrovanne 58 s'ouvre (figure 6), en laissant l'eau passer par la canalisation d'eau épurée 29, pour être envoyée ultérieurement, et à partir de cette cuve, sous l'effet de la pompe 31, à travers le filtre à sable ou à charbon 32 et le debitmètre 33, vers les lignes de production.

D'un autre côté, en ce qui concerne les boues et hydroxydes formés dans la partie inférieure des chambres 21 et 23, zones 46 et 48 (figures 5 et 6) lorsque les éléments de contrôle indiquent qu'ils ont perdu leur capacité de réduction et d'absorption, ces produits sont évacués automatiquement vers le décanteur de boues 35 par la conduite 26, sous l'effet de la pompe 25 et de l'électrovanne qui composent cet ensemble de recirculation et d'évacuation. Les boues déposées dans le décanteur sont transférées au moyen de la canalisation 37, sous l'effet de la pompe 28, au filtre-presse 39 pour subir leur déshydratation et leur compactage final. L'eau sortant de ce processus est envoyée en tête, au moyen de la canalisation 40, à la cuve d'homogénéisation 1, le processus se terminant par la collecte des gâteaux produits dans le filtre-presse 39 et dans le conteneur 41 pour leur évacuation vers une décharge industrielle contrôlée.

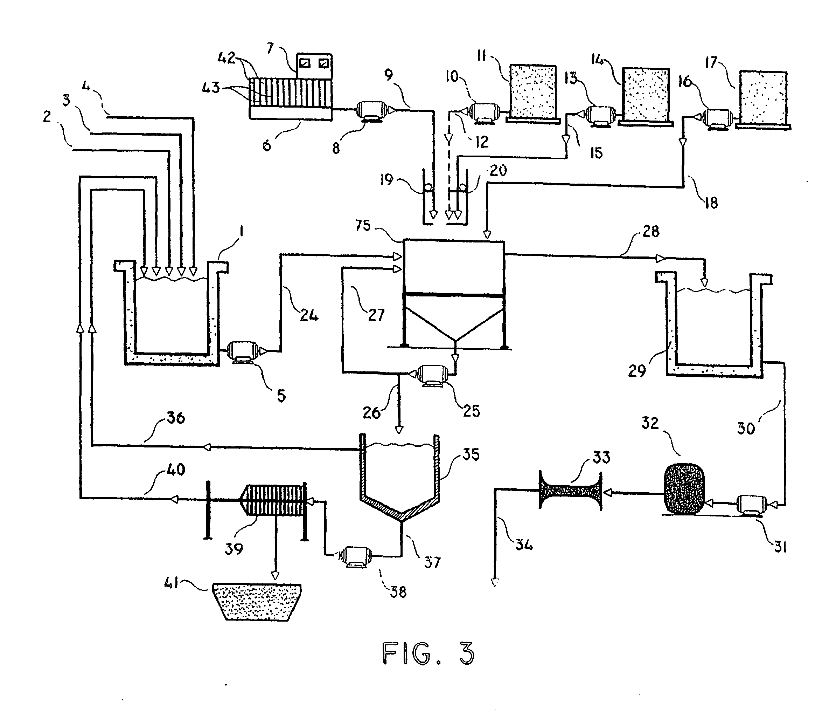

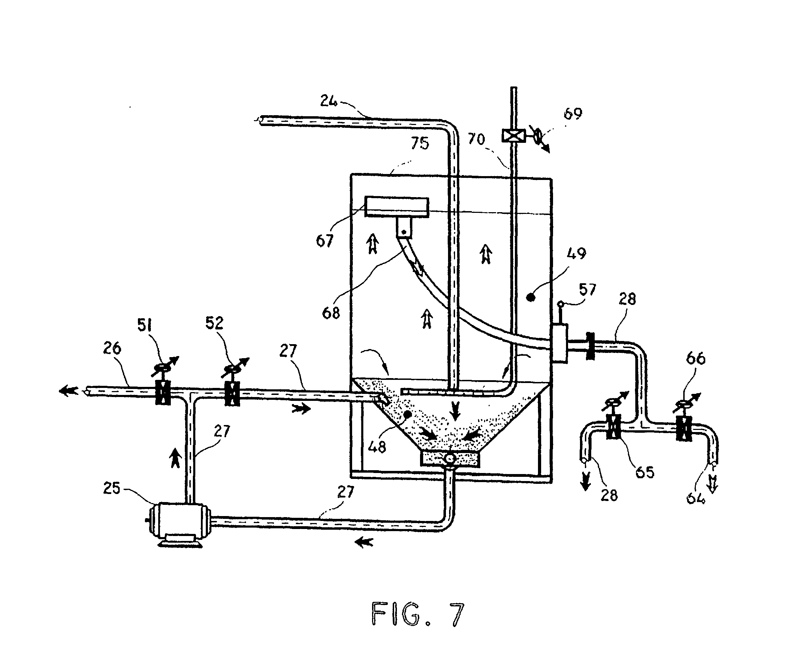

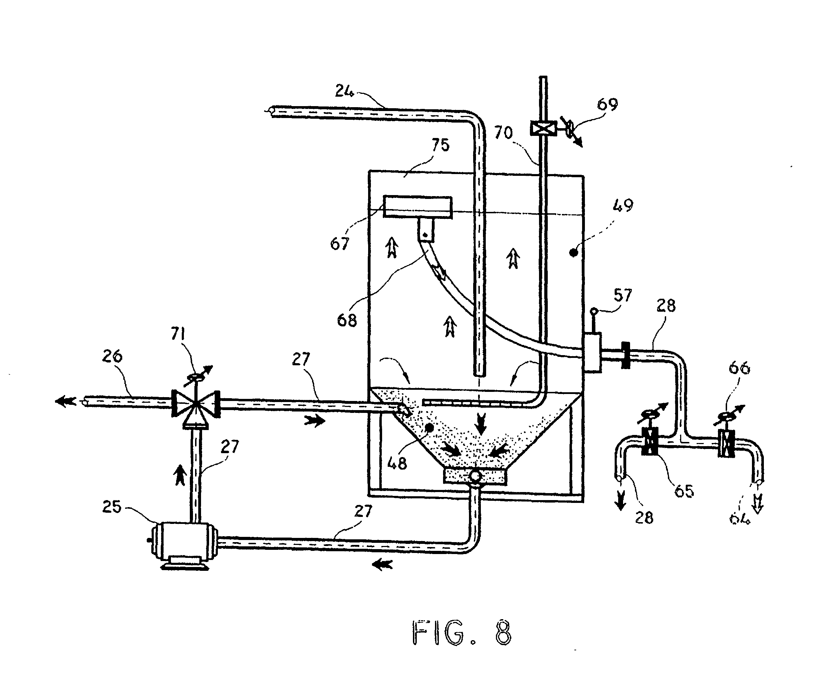

Dans la variante de la figure 3, les eaux à épurer entrent par le conduit 4, en se mélangeant dans la cuve 1 avec les concentrés dosés, acides et alcalins qui parviennent par les conduits 2 et 3. Ensuite, la pompe 5 commence à introduire ces effluents homogénéisés par le conduit 24 dans la chambre de réduction, agitation, séparation et clarification (75), moment où la pompe 8, par son conduit 9, apporte une partie contrôlée du coagulant fabriqué qui se mélange énergiquement avec les effluents sous l'effet de l'impulsion hydraulique de la pompe 5, en remplissant cette chambre 75 qui effectue un processus d'agitation, réduction, mélange et ajustement du pH par addition de soude ou d'acide provenant des cuves 11, 14 et de leurs pompes doseuses respectives 10, 13, pour ajouter ultérieurement le polyélectrolyte nécessaire, en provenance de la cuve 17, au moyen de la pompe doseuse 16, en vue de son mélange effectué au moyen du système d'aération 70 ou d'un système d'agitation mécanique et de l'ensemble de recirculation utilisant la pompe 25 et ses conduites correspondantes (figures 7 et 8), lorsque cette recirculation est nécessaire, la floculation s'effectuant alors, en clarifiant l'eau et les hydroxydes formés restant au fond de la chambre 75.

Les eaux épurées et clarifiées, une fois contrôlées par le pH-mètre 19, le rédoxymètre 20 (figure 3) et le turbidimètre 57 (figure 7), sont évacuées au moyen de la canalisation 68, de l'électrovanne 65 et du conduit 28, jusqu'à la cuve d'accumulation d'eau épurée 29, pour être envoyées ultérieurement, et à partir de cette cuve, sous l'effet de la pompe 31, à travers le filtre à sable ou à charbon 32 et le débitmètre 33, vers les lignes de production.

D'un autre côté, en ce qui concerne les boues et hydroxydes formés dans la partie inférieure de la chambre 75, zone 48 (figures 7 et 8), lorsque les éléments de contrôle indiquent qu'ils ont perdu leur capacité de réduction et d'absorption, ces produits sont évacués automatiquement vers le décanteur de boues 35 par la conduite 26, sous l'effet de la pompe 25 et des canalisations et électrovannes qui composent cet ensemble de recirculation et d'évacuation. Les boues déposées dans le décanteur sont transférées au moyen de la canalisation 37, sous l'effet de la pompe 28, au filtre-presse 39 pour subir leur déshydratation et leur compactage final. L'eau sortant de ce processus est envoyée en tête, au moyen de la canalisation 40, à la cuve d'homogénéisation 1, le processus se terminant par la collecte des gâteaux produits dans le filtre-presse 39 et dans le conteneur 41 pour leur évacuation vers une décharge industrielle contrôlée.

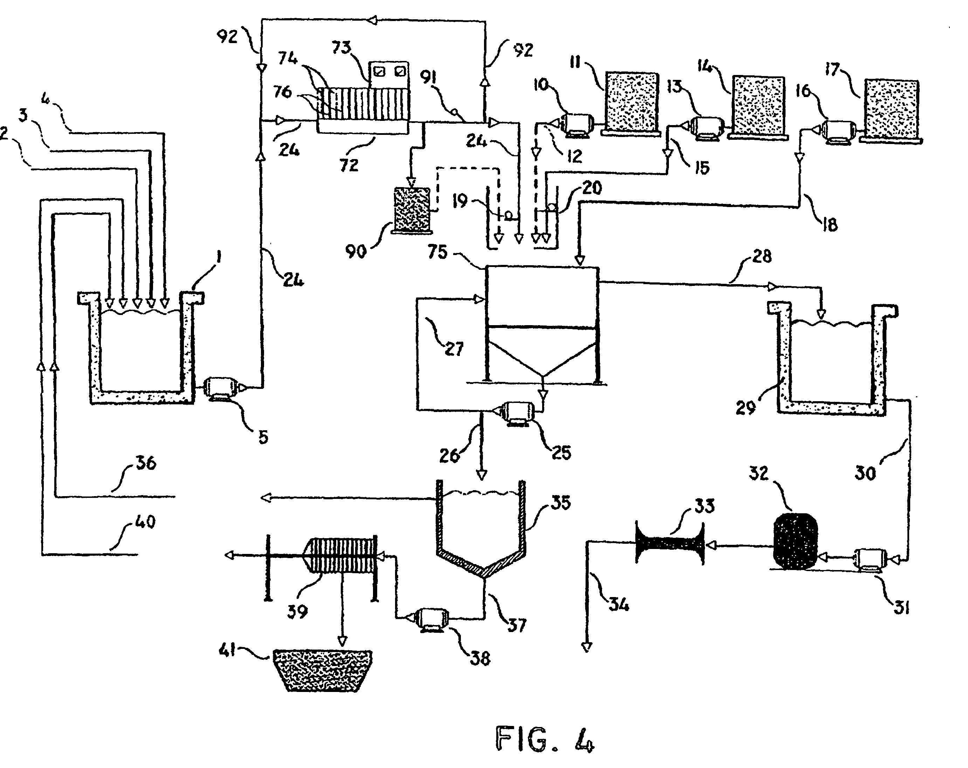

Dans le cas de la figure 4, les eaux à épurer entrent par le conduit 4, en se mélangeant dans la cuve 1 avec les concentrés dosés, acides et alcalins qui parviennent par les conduits 2 et 3. Ensuite, la pompe 5 commence à introduire ces effluents homogénéisés par le conduit 24 dans la partie inférieure du générateur-réacteur 72, en fonctionnement au moyen de son redresseur 73 (figures 4 et 10) en les obligeant à passer à travers les anodes et cathodes 74 et 76, qui peuvent être solubles ou insolubles, et dans sa zone de réaction 89 (figure 10) pour parvenir à la partie supérieure du générateur-réacteur et sortir par le conduit 24 préparé à cet effet, en remplissant la chambre 75 qui effectue un processus d'agitation, mélange, clarification et ajustement du pH par addition de soude ou d'acide provenant des cuves 11, 14 et de leurs pompes doseuses respectives 10, 13, en ajoutant ultérieurement le polyélectrolyte nécessaire, en provenance de la cuve 17, au moyen de la pompe doseuse 16, en vue de son mélange effectué au moyen du système d'aération 70 ou d'un système d'agitation mécanique et de l'ensemble de recirculation utilisant la pompe 25 et ses conduites correspondantes (figures 7 et 8), lorsque cette recirculation est nécessaire, la floculation s'effectuant alors, en clarifiant l'eau et les hydroxydes formés restant au fond de la chambre 75.

Les eaux épurées et clarifiées, une fois contrôlées par le pH-mètre 19, le rédoxymètre 20 (figure 3) et le turbidimètre 57 (figure 7), sont évacuées au moyen de la canalisation 68, de l'électrovanne 65 et du conduit 28, jusqu'à la cuve d'accumulation d'eau épurée 29, pour être envoyées ultérieurement, et à partir de cette cuve, sous l'effet de la pompe 31, à travers le filtre à sable ou à charbon 32 et le débitmètre 33, vers les lignes de production.

D'un autre côté, les boues et hydroxydes formés dans la partie inférieure de la chambre 75, zone 48 (figures 7 et 8), lorsque les éléments de contrôle indiquent qu'ils ont perdu leur capacité de réduction et d'absorption, sont évacués automatiquement vers le décanteur de boues 35 par la conduite 26, sous l'effet de la pompe 25 et des canalisations et électrovannes qui composent cet ensemble de recirculation et d'évacuation. Les boues déposées dans le décanteur sont transférées au moyen de la canalisation 37, sous l'effet de la pompe 28, au filtre-presse 39 pour subir leur déshydratation et leur compactage final. L'eau sortant de ce processus est envoyée en tête, au moyen de la canalisation 40, à la cuve d'homogénéisation 1, le processus se terminant par la collecte des gâteaux produits dans le filtre-presse 39 et dans le conteneur 41 pour leur évacuation vers une décharge industrielle contrôlée.

Sur les figures 5 et 6, on a représenté des réalisations en détail d'un générateur à deux corps 21 et 23 tel que celui utilisé dans les installations des figures 1 et 2, et on peut observer la chambre de floculation 22 munie de pales agitatrices 47, cependant qu'il existe dans la zone de clarification 49 une sortie 45 sous vide équipée d'une électrovanne 56 tandis que la chambre de réduction et de mélange 21 dispose d'une autre sortie sous vide 50 munie d'une électrovanne correspondante 55.

De la partie inférieure de la chambre 21, part une conduite 44 d'évacuation des boues engendrées, laquelle va déboucher dans la conduite de recirculation 27, en aval d'une électrovanne 54 dans la réalisation de la figure 5, et à travers une vanne double 60 dans la réalisation de la figure 6, en aval de laquelle vanne la conduite 27 se prolonge par un conduit 61 qui passe par la pompe 25 pour aller déboucher à travers une vanne double 59 dans le conduit de sortie 26 et un autre conduit 62 provenant de la zone de mélange 46 de la partie inférieure de la chambre 21. Dans la réalisation de la figure 5, la conduite de recirculation 27 débouche en amont du conduit de sortie 26, entre deux électrovannes 51 et 52, cependant que, dans ce cas, il existe une autre éléctrovanne 53 dans la conduite 44 d'évacuation des boues.

Sur les figures 7 et 8, sont représentées des réalisations en détail d'un réacteur à un seul corps 75, tel que celui utilisé dans les installations des figures 3 et 4, où l'on observe la canalisation 68 d'évacuation de l'eau épurée, soumise à un flotteur 67, ladite canalisation 68 débouchant dans la sortie 28, qui se ramifie à travers une électrovanne 66, par une conduite 64 de retour à la cuve d'homogénéisation 20. Dans la réalisation de la figure 8, la conduite 27 de recirculation débouche en amont du conduit de sortie 26 à travers une électrovanne double 71.

Dans ces cas, la conduite d'air 70 dans laquelle est incorporée une électrovanne 69 pénètre jusque dans la zone 48 de séparation des hydroxydes, située dans la partie inférieure.

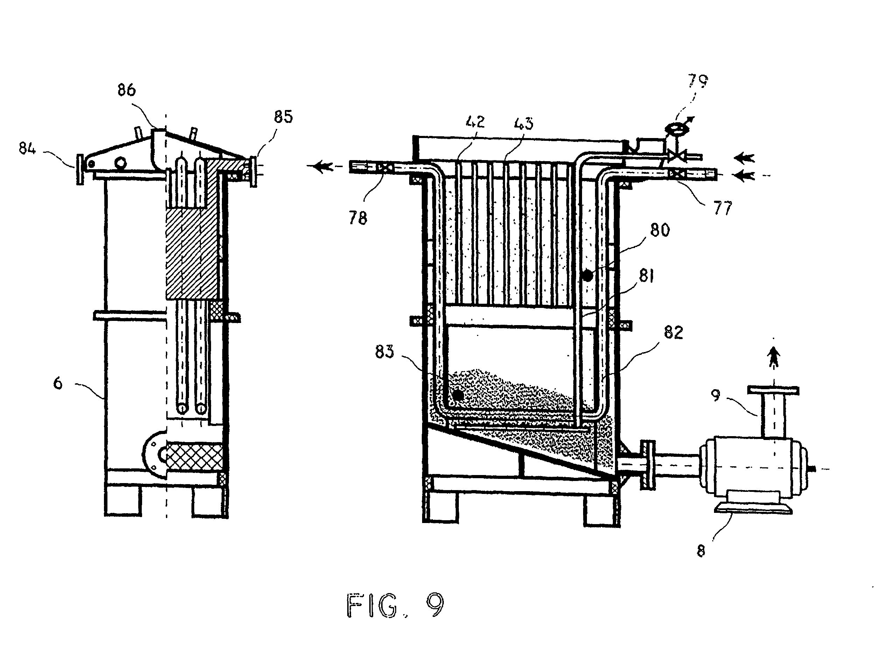

Sur la figure 9, on a représenté le générateur 6 utilisé dans les installations des figures 1 et 3, selon deux vues correspondantes, dont l'une est une vue de profil avec la moitié en coupe et l'autre prise d'un côté et entièrement en coupe, de sorte qu'on peut observer les anodes 42 et les cathodes 43 situées dans la zone de réaction 80, ainsi que le passage d'un serpentin 82 dans une zone 83 d'accumulation du coagulant, avec les vannes respectives 77 et 78 de commande de l'entrée et de la sortie de l'eau.

En supplément, une conduite d'air 81 dans laquelle est incorporée une électrovanne 79 pénètre jusque dans la même zone 83 d'accumulation de coagulant.

Dans la vue de profil, on peut observer, d'autre part, la plaquette positive 84 et la plaquette négative 85 au moyen desquelles s'établissent les connexions entre les anodes et entre les cathodes 43, tandis que, dans la partie supérieure, on observe la canalisation d'évacuation 86.

Sur la figure 10, on a représenté pour sa part une perspective du générateur-réacteur 72, accompagné du redresseur respectif 73, conformément à l'ensemble utilisé dans les installations des figures 2 et 4, et on peut observer la plaquette positive 87 et la plaquette négative 88 au moyen desquelles s'établissent les connexions entre les anodes respectives 74 et entre les cathodes respectives 76 ; cependant que, dans la partie inférieure, on observe la canalisation d'évacuation 63.

Dans le cas de la figure 4, on combine les procédés utilisés sur les figures 1, 2 et 3 qui effectuent l'opération au moyen de la production du coagulant dans un milieu séparé des eaux à épurer (figure 1 et 3) ou conjointement avec celle-ci (figures 2 et 4). Où, premièrement, on produit le coagulant séparément des eaux à épurer et, au moyen d'un jeu de vannes, ce coagulant est envoyé à l'accumulateur 90 pour être ensuite envoyé en une quantité dosée au réacteur 75 lorsque les éléments de contrôle l'exigent, et que le potentiel rédox du contrôleur 20 nous indique la présence de chrome VI qui est dû à une entrée excessive de contaminants. En outre et indépendamment, dans son fonctionnement normal, le contrôleur de rédox 91 monté dans le conduit 24 donnera ordre de faire recirculer les eaux à épurer par le conduit 92 lorsqu'il détecte la présence de chrome VI, en fermant le passage d'entrée et de sortie du conduit 24 depuis la cuve 4 jusqu'au réacteur 75 et aux réacteurs 21 et 23 dans le cas de la figure 2.

Si le contrôleur 91 ne l'empêche pas devant la présence de chrome VI. Les petites quantités de chrome VI qui ont pu passer dans la chambre 75 ou dans les chambres 21 et 23 avant que le contrôleur 91 ne ferme leur passage, seront éliminées par un processus de dosage du coagulant de l'accumulateur 90.

## Revendications

1. Procédé pour épurer les eaux résiduaires industrielles et pour obtenir le réactif nécessaire pour l'épuration, du type par lequel le traitement des eaux résiduaires à épurer s'effectue au moyen d'une solution appelés coagulant en réaction continue permanente, produite par la dissolution d'anodes métalliques qui peuvent être de différentes matières, dans une solution aqueuse par un moyen électrochimique, dans lequel le coagulant se forme par la dissolution des anodes en ions et hydroxydes de fer (II et III), avec des ions d'autres métaux, dans un élément conteneur appelé générateur-réacteur, **caractérisé en ce que** le générateur-réactéur mentionné est constitué par une série d'anodes et de cathodes solubles faites de plaques ou de grillages de fer à faible teneur en carbone, d'aluminium et d'autres matières, qui sont tous de compositions standards, et qui se mettent en connexion électrique positive et négative respective, dans une cuve destinée à être remplie d'une solution aqueuse contenant un acide et un sel, le générateur-réacteur étant équipé d'une entrée d'air qui se ramifie en sorties multiples réparties dans la partie inférieure du générateur-réacteur tandis qu'à son tour, ledit générateur-réacteur est doté d'un moyen de réfrigération forcée, à réglage manuel ou automatique, pour stabiliser la température à l'intérieur de la cuve pendant le processus électrolytique, **en ce qu'**il y a une insufflation périodique d'air injectée dans le coagulant qui se trouve à l'intérieur du générateur-réacteur au moyen de ladite entrée d'air en les zones de concentration de coagulant au fond du générateur-réacteur, et **en ce que** des boues actives sont formées au cours du procédé d'épuration dans le générateur-réacteur et il y a une recirculation forcée de l'eau dans le processus ensemble avec le coagulant et les boues actives formées.

2. Procédé pour épurer les eaux résiduaires industrielles et pour obtenir le réactif nécessaire pour l'épuration, selon la revendication 1, **caractérisé en ce que** selon une réalisation, les anodes et les cathodes du générateur-réacteur sont constituées par des plaques alternées en fer à basse teneur en carbone ou bien en acier à haute et basse teneur en carbone, ou bien les cathodes sont faites en aluminium et autres matières, qui peuvent toutes être de composition standard ou spéciale, de même épaisseur ou d'épaisseurs différentes, la connexion électrique de ces plaques pouvant être permutée manuellement ou automatiquement pour l'inversion des groupes dans leur fonctionnement en anodes et en cathodes.

3. Procédé pour épurer les eaux résiduaires industrielles et pour obtenir le réactif nécessaire pour l'épuration selon la revendication 1, **caractérisé en ce que**, selon une réalisation, le moyen de réfrigération est constitué par un serpentin disposé dans les côtés ou le fond de la cuve, en formant un conduit de circulation d'eau ou d'une autre substance analogue dans un circuit fermé ou ouvert.

4. Procédé pour épurer les eaux résiduaires industrielles et pour obtenir le réactif nécessaire pour l'épuration selon la revendication 1, **caractérisé en ce que** l'intérieur de la cuve du générateur-réacteur est divisé en deux parties, en formant une chambre supérieure et une autre inférieure, avec communication de passage direct entre ces chambres au moyen d'un conduit intérieur ou extérieur, et s'établissant en supplément une autre communication entre lesdites chambres par un conduit équipé d'une pompe capable de produire le renvoi du fluide de la chambre inferieure à la chambre supérieure, en donnant naissance à une recirculation avec un effet réfrigérant.

5. Procédé pour épurer les eaux résiduaires industrielles et pour obtenir le réactif nécessaire pour l'épuration selon la revendication 1, **caractérisé en ce que** le fond de la cuve du générateur-réacteur présente une certaine inclinaison vers une extrémité, où est définie en position inférieure une sortie pour le coagulant qui se forme dans le processus électrolytique.

6. Procédé pour épurer les eaux résiduaires industrielles et pour obtenir le réactif nécessaire pour l'épuration selon la revendication 1, **caracterise en ce que** l'intérieur de la cuve du générateur-réacteur présente une forme de construction spéciale, d'une dapacite d'entre 0,01 et 15 m³, sa construction pouvant être unitaire ou modulaire, en un ou plusieurs corps, en utilisant pour le processus d'épuration des eaux résiduaires différents systèmes d'agitation des éffluents, de type mécanique, hydraulique, pneumatique etc., avec entrée continue des effluents et sortie permanente de l'eau épurée, ou bien avec entrée et sortie par charges discontinues des effluents et de l'eau épurée.

7. Procédé pour épurer les eaux résiduaires industrielles et pour obtenir le réactif nécessaire pour l'épuration selon la revendication 1, **caractérisé en ce que**, dans le processus de l'électrolyse, on utilise une relation de l'intensité de courant électrique par rapport à la surface des anodes d'entrée 2,5 et 6 A/dm², 84 Joules étant nécessaires pour réduire un milligramme de Cr⁶⁺, avec une constante de rendement comprise entre 1,15 et 2,5.

8. Procédé pour épurer les eaux résiduaires industrielles et pour obtenir le réactif nécessaire pour l'épuration selon la reveadication 1, **caractérisé en ce que** la réduction des contaminants des eaux à épurer s'effectue de façon ionisée, par une électrolyse qui effectue la réduction des ions de métaux lourds par l'application de courant continu d'entre 2 et 48 volts et avec un ampérage qui peut osciller entre 10 et 2000 ampères.

9. Procédé pour épurer les eaux résiduaires industrielles et pour obtenir le réactif nécessaire pour l'épuration selon la revendication 1, **caractérisé en ce que**, dans le cas de l'utilisation d'anodes et cathodes en fer, la solution de traitement des eaux à épurer contient entre 30 et 60 g/l d'hydroxydes (II et III) de ce métal recalculé pour un fer (II) et de 80 à 250 mg/l d'hydroxydes (III) dans le cas de l'utilisation d'aluminium dans les anodes, et de 80 à 250 mg/l d'un chlorure d'un métal alcalin, en conservant dans ce cas les cathodes de fer.

10. Précédé peur épurer les eaux résiduaires industrielles et pour obtenir le réactif nécessaire pour l'épuration selon la revendication 1, **caractérisé en ce que** la solution de réaction continue est produite dans un milieu aqueux séparé, au moyen de la dissolution d'anodes formées de différentes matières, par l'application d'un courant continu d'entre 2 et 48 volts entre les anodes et les cathodes, et avec un ampérage qui peut osciller entre 10 et 2000 ampères.

11. Procédé pour épurer les eaux résiduaires industrielles et pour obtenir le réactif nécessaire pour l'épuration selon la revendication 1, **caractérisé en ce que** la solution en réaction continue permanente est obtenue dans un milieu aqueux séparé des eaux à épurer, au moyen de la dissolution d'anodes et de cathodes, la connexion électrique de ces dernières pouvant être pérmutée par voie manuelle ou automatiquement pour l'inversion des groupes dans leur fonctionnement en anodes et en cathodes.

12. Procédé pour épurer les eaux résiduaires industrielles et pour obtenir le réactif nécessaire pour l'épuration selon la revendication 1, **caractérisé en ce que** la solution en réaction continue permanente est produite dans un milieu aqueux en présence des eaux à épurer, par la dissolution d'anodes et de cathodes, la connexion électrique de ces dernières pouvant être permutée par voie manuelle ou automatiquement par l'inversion des groupes dans leur fonctionnement en anodes et en cathodes.

13. Procédé pour épurer les eaux résiduaires industrielles et pour obtenir le réactif nécessaire pour l'épuration selon la revendication 1, **caractérisé en ce que** la solution de traitement des eaux à épurer est produite en présence desdites eaux à épurer, en libérant une quantité d'ions et d'hydroxydes des anodes qui oscille entre 30 et 2000 g/h, leur production dépendant de la concentration de métaux lourds et du débit des eaux ; la solution s'effectuant en réaction continue, de préférence à une valeur du Ph d'entre 3 et 8,5, selon la relation existant entre les ions Cr⁶⁺ et les autres ions de métaux lourds existant dans les eaux.

14. Procédé pour épurer les eaux résiduaires industrielles et pour obtenir le réactif nécéssaire pour l'épuration selon la revendication 1, **caractérisé en ce que** la solution de traitement des eaux à épurer contient une dissolution de chlorure de sodium et d'autres sels qui n'est pas superieure à 250 mg/l.

15. Procédé pour épurer les eaux résiduaires industrielles et pour obtenir le réactif nécessaire pour l'épuration selon la revendication 1, **caractérisé en ce que**, selon les caractéristiques des eaux à épurer, on n'aura pas besoin d'une dilution de chlorure de sodium ou d'autres sels dans la solution de traitement desdites eaux.

16. procédé pour épurer les eaux résiduaires industrielles et pour obtenir le réactif nécessaire pour l'épuration selon la revendication 1, **caractérisé en ce que**, lorsque le réacteur est à deux corps, il est prévu entre ces derniers une recirculation forcée du coagulant et des hydroxydes formés dans lesdits corps, qui s'éffectue par l'ouverture et la fermeture d'électrovannes.

17. Procédé pour épurer les eaux résiduaires industrielles et pour obtenir le réactif nécessaire pour l'épuration selon la revendication 1, **caractérisé en ce que**, lorsque le réacteur est à un seul corps, il est prévu dans ce réacteur une recirculation forcée du coagulant et des hydroxydes formées dans ledit corps, par ouverture et fermeture d'une ou de deux electrovannes.

18. Procédé pour épurer les eaux résiduaires industrielles et pour obtenir le réactif nécessaire pour l'épuration tant en présence des eaux résiduaires que séparément de ces eaux, selon la revendication 1, **caractérisé en ce que** la réaction, qui se produit dans une solution sous l'effet d'une électrolyse produite dans un milieu liquide, affecte les anodes et cathodes lorsqu'on fait passer un courant éléctrique entre elles, les anodes étant solubles ou insolubles et les anodes étant formées de plaques ou de grillages de différentes matières, et toutes pouvant être de composition standard ou spéciale, où le réactif produit séparément des eaux à épurer est stocké dans une cuve d'accumulation, d'où il sera transféré dans une quantité dosée au réacteur à un corps ou à deux corps, avec recirculation forcée incorporée, le dosage s'effectuant lorsque la charge de contaminants et le chrome VI excèdent les limites préalablement établies.

19. Procédé pour épurer les eaux résiduaires industrielles et pour obtenir le réactif nécessaire pour l'épuration tant en présence des eaux résiduaires que séparément de ces eaux, selon la revendication 1, **caractérisé en ce que** la réaction, qui se produit dans une solution sous l'effet d'une électrolyse produite dans un milieu liquide affecte les anodes et les cathodes lorsqu'on fait passer un courant électrique entre ces dernières, les anodes étant solubles ou insolubles, et les anodes étant formées de plaques ou de grillages de différentes matières, toutes pouvant être de composition spéciale ou standard, où, initialement, le réactif est produit séparément des eaux à épurer et stocké dans une cuve d'accumulation d'où elle sera ensuite transférée en une quantité dosée au réacteur à un corps ou à deux corps, avec recirculation forcée incorporée, le dosage s'effectuant lorsque la charge de contaminants et le chrome VI excèdent les limites préalablement établies, et où, ensuite, les eaux à épurer s'écoulent de la cuve accumulateur jusqu'au réacteur à un corps ou à deux corps à travers le générateur-réacteur, où il existe la possibilité de recycler ces eaux lorsque la limite de contaminants et du chrome VI excède les paramètres préalablement établis.

## Patentansprüche

1. Verfahren zum Reinigen von Industrieabwässern und zum Herstellen des zur Reinigung notwendigen Reagens, des Typs, bei welchem die Behandlung von zu reinigenden Abwässern durch eine Koagulans genannte Lösung in Reaktion beständig abläuft, welche hergestellt wird durch das Auflösen metallischer Anoden, die aus unterschiedliche Materialien sein können, in einer wässerigen Lösung mit Hilfe einer elektrochemischen Einrichtung, in welcher das Koagulans sich bildet durch das Auflösen der Anoden zu lonen und Hydroxiden des Eisens (II und III), mit anderen Metallionen, in einem Behälter-Element, genannt Generator-Reaktor, **dadurch gekennzeichnet, daß**
der Generator-Reaktor aus einer Reihe von löslichen Anoden und Kathoden gebildet ist, die aus Platten oder Gitterwerken aus Eisen mit geringem Kohlenstoffgehalt, Aluminium und anderen Materialien gemacht sind, die alle Standard-Zusammensetzungen haben und die positiv, bzw. negativ elektrisch verbunden sind in einem Behälter, der dazu bestimmt ist, mit einer wässerigen Lösung gefüllt zu werden, die eine Säure und ein Salz enthält, wobei der Generator-Reaktor mit einem Lufteinlass ausgestattet ist, der sich in mehrere Auslässe verzweigt, die im inneren Bereich des Generator-Reaktors verteilt sind, wobei der Generator-Reaktor an seinem Umfang mit einer Einrichtung zum Kühlen mit automatischer oder manueller Steuerung ausgestattet ist, um die Temperatur im Inneren des Behälters während des elektrochemischen Verfahrens zu stabilisieren;
es eine periodische Einblasung von Luft in das Koagulans gibt, das sich im Inneren des Generator-Reaktors befindet durch Eintreten der Luft in die Zonen der Konzentration des Koagulans am Boden des Generator-Reaktors; und daß
aktivierte Schlämme im Verlauf des Reinigungsverfahrens im Generator-Reaktor gebildet werden und daß es eine erzwungene Zirkulation des Wassers zusammen mit dem Koagulans und den gebildeten aktivierten Schlämmen gibt.

2. Verfahren zum Reinigen von Industrieabwässern und zum Herstellen des zur Reinigung notwendigen Reagens gemäß Anspruch 1, **dadurch gekennzeichnet, daß** entsprechend einer Ausführungsform die Anoden und Kathoden des Generator-Reaktors aus alternierenden Platten aus Eisen mit niedrigem Kohlenstoffgehalt oder aus Stahl mit hohem und niedrigem Kohlenstoffgehalt gebildet sind, oder daß die Kathoden aus Aluminium und anderen Materialien gemacht sind, die sämtlich Standard-Zusammensetzungen oder Spezial-Zusammensetzungen haben können, von gleicher Dicke oder unterschiedlichen Dicken, wobei die elektrische Verbindung dieser Platten manuell oder automatisch vertauscht werden kann zur Inversion der Gruppen in ihrer Funktion als Anoden und als Kathoden.

3. Verfahren zum Reinigen von Industrieabwässern und zum Herstellen des zur Reinigung notwendigen Reagens gemäß Anspruch 1, **dadurch gekennzeichnet, daß**, gemäß einer Ausführungsform, die Einrichtung zum Kühlen aus einer Schlange gebildet ist, die an den Seiten oder am Boden des Behälters angebracht ist, wobei sie in einem geschlossenen oder offenen Kreislauf eine Umlauf-Leitung bildet, in der Wasser oder eine andere analoge Substanz umläuft.

4. Verfahren zum Reinigen von Industrieabwässern und zum Herstellen des zur Reinigung notwendigen Reagens gemäß Anspruch 1, **dadurch gekennzeichnet, daß** das Innere des Behälters des Reaktor-Generators in zwei Abschnitte unterteilt ist, wobei eine obere und eine untere Kammer gebildet ist, mit einer direkten Verbindungspassage zwischen diesen beiden Kammern durch eine innere oder äußere Leitung und in Ergänzung eine weitere Verbindung zwischen den Kammern durch eine Leitung, die mit einer Pumpe ausgestattet ist, die in der Lage ist, ein Zurücktransportieren des Fluids von der unteren zur oberen Kammer zu erzeugen, wobei eine Zirkulation mit Kühlungseffekt in Gang gesetzt wird.

5. Verfahren zum Reinigen von Industrieabwässern und zum Herstellen des zur Reinigung notwendigen Reagens gemäß Anspruch 1, **dadurch gekennzeichnet, daß** der Boden des Behälters des Reaktor-Generators eine gewisse Neigung in der Richtung eines Endes aufweist, wo in unterer Position ein Auslaß für das Koagulans definiert ist, das sich im elektrochemischen Prozeß bildet.

6. Verfahren zum Reinigen von Industrieabwässern und zum Herstellen des zur Reinigung notwendigen Reagens gemäß Anspruch 1, **dadurch gekennzeichnet, daß** der Behälter des Reaktor-Generators eine Form mit speziellem Aufbau mit einer Kapazität zwischen 0,01 und 15 m³ aufweist, wobei ihr Aufbau einteilig oder modular aus einem oder mehreren Hauptteilen sein kann, wobei für das Verfahren zum Reinigen von Industrieabwässern unterschiedliche Systeme zur Umwälzung der mechanischen, hydraulischen, pneumatischen, etc. Art verwendet werden, mit kontinuierlichem Einfließen von Abwässern und kontinuierlichem Ausfließen von gereinigtem Wasser, oder mit Einfließen und Ausfließen durch nicht-kontinuierliche Chargen von Abwässern und gereinigtem Wasser.

7. Verfahren zum Reinigen von Industrieabwässern und zum Herstellen des zur Reinigung notwendigen Reagens gemäß Anspruch 1, **dadurch gekennzeichnet, daß** im elektrochemischen Prozeß ein Verhältnis von Stromstärke zu Anodenfläche zwischen 2,5 und 6 A/dm² verwendet wird, wobei 84 J notwendig sind um ein Milligramm Cr⁶⁺ zu reduzieren mit einer Wirkungskonstante zwischen 1,15 und 2,5.

8. Verfahren zum Reinigen von Industrieabwässern und zum Herstellen des zur Reinigung notwendigen Reagens gemäß Anspruch 1, **dadurch gekennzeichnet, daß** die Reduktion von Verunreinigungen der zu reinigenden Abwässer auf ionisierte Weise durchgeführt wird, durch eine Elektrolyse, die die Reduktion von Schwermetallionen bewirkt, durch Anlegen eines Gleichstroms zwischen 2 und 48 V und mit einer Stromstärke, die zwischen 10 und 2000 A schwanken kann.

9. Verfahren zum Reinigen von Industrieabwässern und zum Herstellen des zur Reinigung notwendigen Reagens gemäß Anspruch 1, **dadurch gekennzeichnet, daß** im Fall der Verwendung von Anoden und Kathoden aus Eisen die Lösung zur Behandlung von zu reinigenden Abwässern zwischen 30 und 60 9/1 der Hydroxide (II und III) dieses Metalls, berechnet für Eisen (II), und 80 bis 250 mg/l der Hydroxide (III), im Fall der Verwendung von Aluminium für die Anoden, und 80 bis 250 mg/l eines Alkalimetallchlorids enthält, zum Erhalten der Kathoden aus Eisen in diesem Fall.

10. Verfahren zum Reinigen von Industrieabwässern und zum Herstellen des zur Reinigung notwendigen Reagens gemäß Anspruch 1, **dadurch gekennzeichnet, daß** die Lösung der kontinuierlichen Reaktion in einem abgetrennten wässerigen Milieu hergestellt wird, durch das Auflösen der aus unterschiedlichen Materialien gebildeten Anoden unter Anlegen eines Gleichstroms von 2 bis 48 V zwischen den Anoden und den Kathoden mit einer Stromstärke, die zwischen 10 und 2000 A schwanken kann.

11. Verfahren zum Reinigen von Industrieabwässern und zum Herstellen des zur Reinigung notwendigen Reagens gemäß Anspruch 1, **dadurch gekennzeichnet, daß** die Lösung der kontinuierlichen Reaktion in einem von den zu reinigenden Abwässern abgetrennten wässerigen Milieu erhalten wird, durch das Auflösen der Anoden und Kathoden, wobei die elektrische Verbindung zwischen diesen manuell oder automatisch ausgetauscht werden kann zur Inversion der Gruppen in ihrer Funktion als Anoden und als Kathoden.

12. Verfahren zum Reinigen von Industrieabwässern und zum Herstellen des zur Reinigung notwendigen Reagens gemäß Anspruch 1, **dadurch gekennzeichnet, daß** die Lösung der kontinuierlichen, ständigen Reaktion in einem wässerigen Milieu in Gegenwart der zu reinigenden Abwässer hergestellt wird, durch das Auflösen der Anoden und Kathoden, wobei die elektrische Verbindung zwischen diesen manuell oder automatisch ausgetauscht werden kann zur Inversion der Gruppen in ihrer Funktion als Anoden und als Kathoden.

13. Verfahren zum Reinigen von Industrieabwässern und zum Herstellen des zur Reinigung notwendigen Reagens gemäß Anspruch 1, **dadurch gekennzeichnet, daß** die Lösung zur Behandlung der zu reinigenden Abwässer in Gegenwart der zu reinigenden Abwässer hergestellt wird, durch Freisetzen einer Menge von lonen oder Hydroxiden der Anoden, die zwischen 30 und 2000 g/h schwankt, wobei ihre Produktion abhängt von der Schwermetallionenkonzentration und dem Durchsatz der Abwässer; die Lösung wird in kontinuierlicher Reaktion hergestellt, vorzugsweise bei einem pH-Wert von 3 bis 8,5, gemäß dem Verhältnis zwischen Cr⁶⁺ und den anderen Schwermetallionen, welche in den Abwässern vorkommen.

14. Verfahren zum Reinigen von Industrieabwässern und zum Herstellen des zur Reinigung notwendigen Reagens gemäß Anspruch 1, **dadurch gekennzeichnet, daß** die Lösung zur Behandlung von zu reinigenden Abwässern eine Lösung von Natriumchlorid und anderen Salzen enthält, die 250 mg/ml nicht übersteigt.

15. Verfahren zum Reinigen von Industrieabwässern und zum Herstellen des zur Reinigung notwendigen Reagens gemäß Anspruch 1, **dadurch gekennzeichnet, daß**, entsprechend der Eigenschaften der zu reinigenden Abwässer, keine Lösung von Natriumchlorid oder anderen Salzen in der Lösung zur Behandlung von zu reinigenden Abwässern benötigt wird.

16. Verfahren zum Reinigen von Industrieabwässern und zum Herstellen des zur Reinigung notwendigen Reagens gemäß Anspruch 1, **dadurch gekennzeichnet, daß**, falls der Reaktor zwei Hauptteile hat, zwischen diesen eine erzwungene Zirkulation des Koagulans und der in den Hauptteilen gebildeten Hydroxide vorgesehen ist, die durch das Öffnen und Schließen von Elektroventilen durchgeführt wird.

17. Verfahren zum Reinigen von Industrieabwässern und zum Herstellen des zur Reinigung notwendigen Reagens gemäß Anspruch 1, **dadurch gekennzeichnet, daß**, falls der Reaktor ein Hauptteil hat, in dem Reaktor eine erzwungene Zirkulation des Koagulans und der in dem Hauptteil gebildeten Hydroxide vorgesehen ist, die durch das Öffnen und Schließen von einem oder von zwei Elektroventilen durchgeführt wird.

18. Verfahren zum Reinigen von Industrieabwässern und zum Herstellen des zur Reinigung notwendigen Reagens gemäß Anspruch 1, **dadurch gekennzeichnet, daß** die Reaktion, die in einer Lösung durch den Elektrolyseeffekt in wässerigem Milieu stattfindet, auf die Anoden und Kathoden wirkt, wenn ein Strom zwischen ihnen fließt, wobei die Anoden löslich oder unlöslich sind und die Anoden aus Platten oder Gitterwerken aus unterschiedlichen Materialien gebildet sind und die sämtlich aus Standard-Zusammensetzungen oder Spezial-Zusammensetzungen sein können, wobei das Reagens, das getrennt von den zu reinigenden Abwässern hergestellt wird, in einem Sammelbehälter gelagert wird, von wo es mit dosierter Menge in den Reaktor mit einem oder zwei Hauptteilen und eingegliederter erzwungener Zirkulation überführt wird, wobei die Dosierung durchgeführt wird wenn die Belastung mit Verunreinigungen und Chrom VI vorher festgelegte Grenzwerte überschreitet.

19. Verfahren zum Reinigen von Industrieabwässern, sowie in Gegenwart von Abwässern, die von jenen Abwässern getrennt sind, und zum Herstellen des zur Reinigung notwendigen Reagens gemäß Anspruch 1, **dadurch gekennzeichnet, daß** die Reaktion, die in einer Lösung durch den Elektrolyseeffekt in flüssigem Milieu stattfindet, auf die Anoden und Kathoden wirkt, wenn ein Strom zwischen ihnen fließt, wobei die Anoden löslich oder unlöslich sind und die Anoden aus Platten oder Gitterwerken aus unterschiedlichen Materialien gebildet sind und die sämtlich aus Standard-Zusammensetzungen oder Spezial-Zusammensetzungen sein können, wobei zunächst das Reagens, das getrennt von den zu reinigenden Abwässern hergestellt wird, in einem Sammelbehälter gelagert wird, von wo es anschließend mit dosierter Menge in den Reaktor mit einem oder zwei Hauptteilen und eingegliederter erzwungener Zirkulation überführt wird, wobei die Dosierung durchgeführt wird wenn die Belastung mit Verunreinigungen und Chrom VI die vorher festgelegten Grenzen überschreitet und wo anschließend die zu reinigenden Abwässer von dem Sammelbehälter zu dem Reaktor mit einem oder zwei Hauptteilen und eingegliederter erzwungener Zirkulation über den Generator-Reaktor fließen, wobei die Möglichkeit besteht, diese Abwässer wiederaufzubereiten, wenn der Grenzwert der Verunreinigungen und Chrom VI die vorher festgelegten Parameter überschreitet.

## Claims

1. Process for the purification of residual industrial water and for obtaining the reagent necessary for purification, of the type by which residual water to be purified is treated by means of a solution called a coagulant in a continuous permanent reaction, produced by dissolution of metallic anodes that may be made of different materials, in an aqueous solution using an electrochemical means, in which the coagulant is formed by dissolution of anodes into iron (II and III) hydroxides and ions, with ions of other metals, in a container element called a generator - reaction vessel, **characterised in that** said generator - reaction vessel is composed of a series of soluble anodes and cathodes made from plates or grids of iron with a low content of carbon, aluminium and other materials, all of which are of standard compositions, and that form positive and negative electrical connections respectively, in a tank that will be filled with an aqueous solution containing an acid and a salt, the generator-reaction vessel being equipped with an air inlet that is ramified at multiple outputs distributed in the lower part of the generator - reaction vessel, while the said generator - reaction vessel is in turn provided with a forced cooling means, with manual or automatic adjustment, to stabilise the temperature inside the tank during the electrolytic process, **in that** there is a periodic insufflation of air injected into the coagulant located inside the generator - reaction vessel using said air inlet in the concentration zones of the coagulant at the bottom of the generator - reaction vessel, and **in that** active sludges are formed in the generator - reaction vessel during the purification process and there is forced recirculation of the water in the process together with the coagulant and the active sludges formed.

2. Process for the purification of residual industrial water and for obtaining the necessary reagent for purification, according to claim 1, **characterised in that** according to one embodiment, the anodes and cathodes of the generator - reaction vessel are composed of alternating plates of low carbon content iron or of steel with a high or low carbon content, or the cathodes are made of aluminium or other materials, that may all have a standard or special composition, with the same thickness or different thicknesses, and the electrical connection of these plates may be changed over manually or automatically to invert the groups in their operation as anodes and cathodes.

3. Process for the purification of residual industrial water and for obtaining the reagent necessary for purification according to claim 1, **characterised in that** according to one embodiment, the cooling means is composed of a coil arranged in the sides or the bottom of the tank, by forming a pipe for the circulation of water or a similar substance in a closed or open circuit.

4. Process for the purification of residual industrial water and for obtaining the reagent necessary for purification according to claim 1, **characterised in that** the inside of the generator - reaction vessel tank is divided into two parts, forming an upper chamber and a lower chamber, with a direct communication between these chambers using an internal or external duct, and also setting up another communication between said chambers by a duct equipped with a pump capable of forcing the fluid back from the lower chamber to the upper chamber, creating circulation with a cooling effect.

5. Process for the purification of residual industrial water and for obtaining the reagent necessary for purification according to claim 1, **characterised in that** the bottom of the generator - reaction vessel tank is inclined towards one end, where there is an outlet at a lower position for the coagulant formed in the electrolytic process.

6. Process for the purification of residual industrial water and for obtaining the reagent necessary for purification according to claim 1, **characterised in that** the inside of the generator - reaction vessel tank has a special construction shape with a capacity of between 0.01 and 15 m³, with a unitary or modular construction made of one or several parts, using different types of effluent stirring systems (mechanical, hydraulic, pneumatic etc.) for the residual water purification process, with continuous inlet of the effluents and permanent outlet of the purified water, or with discontinuous inlet and outlet of the effluents and purified water.

7. Process for the purification of residual industrial water and for obtaining the reagent necessary for purification according to claim 1, **characterised in that** a relation between the intensity of the electrical current per unit area of the input anodes equal to between 2.5 and 6 A/dm² is used in the electrolysis process, 84 Joules being necessary to reduce one milligram of Cr⁶⁺, with a yield constant of between 1.15 and 2.5.

8. Process for the purification of residual industrial water and for obtaining the reagent necessary for purification according to claim 1, **characterised in that** the contaminants in the water to be purified are reduced in an ionised manner using an electrolysis process that reduces heavy metal ions by the application of a direct current of between 2 and 48 Volts with an amperage that can oscillate between 10 and 2 000 amperes.

9. Process for the purification of residual industrial water and for obtaining the reagent necessary for purification according to claim 1, **characterised in that** if iron anodes and cathodes are used, the treatment solution for the water to be purified contains between 30 and 60 g/l of hydroxides (II and III) of this metal recalculated for iron (II) and 80 to 250 mg/l of hydroxides (III) if aluminium is used in the anodes, and from 80 to 250 mg/l of an alkaline metal chloride, in this case keeping the iron cathodes.

10. Process for the purification of the residual industrial water and for obtaining the reagent necessary for purification according to claim 1, **characterised in that** the continuous reaction solution is produced in a separate aqueous medium by the dissolution of anodes formed from different materials, by the application of a direct current of between 2 and 48 Volts between the anodes and the cathodes, and with an amperage that can oscillate between 10 and 2 000 amperes.

11. Process for the purification of the residual industrial water and for obtaining the reagent necessary for purification according to claim 1, **characterised in that** the solution in continuous permanent reaction is obtained in an aqueous medium separate from the water to be purified, using dissolution of anodes and cathodes, and the electrical connection between the anodes and the cathodes may be changed over manually or automatically to invert the groups in their operation as anodes and cathodes.

12. Process for the purification of residual industrial water and for obtaining the reagent necessary for purification according to claim 1, **characterised in that** the solution in continuous permanent reaction is produced in an aqueous medium in the presence of the water to be purified, by the dissolution of anodes and cathodes, and the electrical connection of the anodes and cathodes may be changed over manually or automatically to invert the groups in their operation as anodes and cathodes.

13. Process for the purification of residual industrial water and for obtaining the reagent necessary for purification according to claim 1, **characterised in that** the treatment solution of the water to be purified is produced in the presence of the said water to be purred, releasing from the anodes a quantity of ions and hydroxides oscillating between 30 and 2 000 g/h, their production depending on the concentration of heavy metals and the water flow rate; the solution is made in a continuous reaction, preferably with a pH varying between 3 and 8.5, using the relation that exists between the Cr⁶⁺ ions and other heavy metals ions existing in the water.

14. Process for the purification of residual industrial water and for obtaining the reagent necessary for purification according to claim 1, **characterised in that** the treatment solution for the water to be purified contains a dissolution of sodium chloride and of other salts that does not exceed 250 mg/l

15. Process for the purification of residual industrial water and for obtaining the reagent necessary for purification according to claim 1, **characterised in that**, depending on the characteristics of the water to be purified, there is no need for dilution of sodium chloride or other salts in the treatment solution for the said water.

16. Process for the purification of residual industrial water and for obtaining the reagent necessary for purification according to claim 1, **characterised in that**, when the reaction vessel is composed of two parts, there is a forced recirculation between these two parts of the coagulant and the hydroxides formed in the said two parts, controlled by opening and closing solenoid valves.

17. Process for the purification of residual industrial water and for obtaining the reagent necessary for purification according to claim 1, **characterised in that**, when the reaction vessel is made in a single part, there is a forced recirculation of the coagulant and the hydroxides formed within the said single part, controlled by opening and closing one or two solenoid valves.

18. Process for the purification of residual industrial water and for obtaining the reagent necessary for purification either in the presence of residual water or separately from this water, according to claim 1, **characterised in that** the reaction that occurs in a solution under the effect of an electrolysis produced in a liquid medium, affects the anodes and cathodes when an electrical current is passed between them, the anodes being soluble or insoluble, and the anodes being formed of plates or grids of different materials, and all being made with a standard or special composition, in which the reagent produced separately from the water to be purified is stored in a storage tank from which it will be transferred in a metered quantity to the single part or two-part reaction vessel, with built-in forced recirculation, reagent-metering taking place when the content of contaminants and chromium VI exceeds previously defined limits.

19. Process for the purification of residual industrial water and for obtaining the reagent necessary for purification both in the presence of residual water and separately from this water, according to claim 1, **characterised in that** the reaction that takes place in a solution under the effect of an electrolysis produced in a liquid medium affects the anodes and the cathodes when an electrical current is passed between the cathodes and the anodes, the anodes being soluble or insoluble, and the anodes being formed of plates or grids made of different materials, that may all be of special or standard composition, in which the reagent is initially produced separately from the water to be purified and stored in a storage tank from which it will subsequently be transferred in a metered quantity to the single part or two part reaction vessel, with built-in forced recirculation, reagent-metering taking place when the content of contaminants and chromium VI exceeds previously defined limits, and in which the water to be purified then flows from the storage tank as far as the single part or two part reaction vessel through the generator - reaction vessel, in which it is possible to recycle this water when the limit of contaminants and chromium VI exceeds the previously defined parameters.
